# EUROPÄISCHE PATENTSCHRIFT

(11) **EP 4 183 039 B1**
(45) Veröffentlichungstag und Bekanntmachung des Hinweises auf die Patenterteilung: **01.11.2023**
(21) Anmeldenummer: 21785842.2
(22) Anmeldetag: 28.09.2021
(51) Int. Cl.: H02M 7/44, H02K 41/02

(54) **STATORMODUL FÜR EIN LINEARES TRANSPORTSYSTEM, LINEARES TRANSPORTSYSTEM UND BETRIEBSVERFAHREN**
STATOR MODULE FOR A LINEAR TRANSPORT SYSTEM, LINEAR TRANSPORT SYSTEM AND OPERATING METHOD
MODULE DE STATOR POUR UN SYSTÈME DE TRANSPORT LINÉAIRE, SYSTÈME DE TRANSPORT LINÉAIRE ET MÉTHODE DE FONCTIONNEMENT ASSOCIÉE

(30) Priorität: 29.09.2020 DE 102020125396
(43) Veröffentlichungstag der Anmeldung: 24.05.2023
(73) Patentinhaber: Beckhoff Automation GmbH, 33415 Verl (DE)
(72) Erfinder: KAULMANN, Tim, 33104 Paderborn (DE); OTTERPOHL, Dirk, 33397 Rietberg (DE); HEGSELMANN, Marc, 33758 Schloß Holte-Stukenbrock (DE)
(74) Vertreter: Patentanwaltskanzlei WILHELM & BECK
(86) Internationale Anmeldenummer: PCT/EP2021/076583
(87) Internationale Veröffentlichungsnummer: WO 2022/069438

(56) Entgegenhaltungen:
- EP-A1- 3 581 428
- DE-A1- 3 814 867
- DE-T2- 69 836 988
- US-B1- 10 164 555
- LI AN ET AL: "Five-phase Series-end Winding Motor Controller: Converter Topology and Modulation Method", 2019 IEEE ENERGY CONVERSION CONGRESS AND EXPOSITION (ECCE), IEEE, 29 September 2019 (2019-09-29), pages 629-634, XP033666143, DOI: 10.1109/ECCE.2019.8912165 [retrieved on 2019-11-25]

## Beschreibung

Die Erfindung betrifft ein Statormodul für ein lineares Transportsystem sowie ein lineares Transportsystem mit einem solchen Statormodul und ein Betriebsverfahren für ein solches Statormodul.

Aus dem Stand der Technik sind lineare Transportsysteme bekannt, die Statormodule umfassen, wobei die Statormodule einen Stator eines Linearmotors bilden und jeweils mehrere Antriebsspulen umfassen, wobei das lineare Transportsystem ferner einen beweglichen Schlitten umfasst, wobei eine Permanentmagnetanordnung am Schlitten angeordnet ist und einen Schlitten des Linearmotors bildet. Die Antriebsspulen können dabei mittels Vollbrücken bestromt werden. An den beiden Anschlüssen jeder Antriebsspule ist dann eine Halbbrücke aus zwei Transistoren angeordnet, so dass die Antriebsspule bestromt werden kann abhängig vom Schaltzustand der Transistoren. Diese Ausgestaltung ist jedoch sehr aufwändig, da für jede Antriebsspule vier Transistoren benötigt werden. Die Halbbrücken können auch andere Schaltelemente oder spezielle Transistoren wie MOSFETs, IGBTs oder HEMTs aufweisen.

Die Patentanmeldung EP3581428A1 offenbart eine Linearstatortransportanordnung mit einer auf einem Langstator gleitenden Transporteinheit, einer Steuereinheit und im Stator befindlichen Antriebsspulen, die über gemeinsame Halbbrückenmittelpunkte in Reihe geschaltet sind und von der Steuereinheit angesteuert bzw. bestromt werden.

Wie die Antriebsspulen generell bestromt werden können, kann der Druckschrift DE 10 2015 102 236 A1 entnommen werden und ist in dieser Druckschrift insbesondere im Zusammenhang mit den Figuren 6 bis 14 erläutert.

Die Druckschrift EP 3 249 803 A1 schlägt vor, jede Antriebsspule nur mit einer Halbbrücke zu verbinden und den jeweils freibleibenden Anschluss der Antriebsspulen miteinander zu verbinden und so eine Sternschaltung vorzusehen. Dadurch können pro Antriebsspule zwei Transistoren eingespart werden. Die Druckschriften US 10 256 023 B2, EP 3 461 667 A1, US 10 164 555 B1 und US 10 250 176 B2 schlagen ebenfalls eine solche Sternschaltung vor.

In der Druckschrift DE 698 36 988 T2 ist ein modulares Fördersystem mit beweglichen Elementen beschrieben. Die Druckschrift DE 38 14 867 A1 offenbart eine Ansteuereinrichtung für einen elektromotorischen Antrieb. Der Artikel: "Five-phase Series-end Winding Motor Controller: Converter Topology and Modulation Method" von Li An et al, 2019 IEEE Energy Conversion Congress and Exposition (ECCE), IEEE, 29.09.2019, Seiten 629-634, XP033666143, offenbart ebenenfalls eine Ansteuerungselektronik für einen Motor.

Diese Ausgestaltung mittels Sternschaltung hat jedoch den Nachteil, dass eine aufwändige Elektronik am Sternpunkt benötigt wird, wenn die Antriebsspulen mittels der in den genannten Druckschriften offenbarten Sternschaltung angeordnet sind.

Eine Aufgabe der vorliegenden Erfindung ist es, eine Ansteuerungselektronik für Antriebsspulen in einem Statormodul bereitzustellen, mit der ebenfalls Transistoren eingespart werden können gegenüber Vollbrücken, bei der jedoch auch keine aufwändige Elektronik für einen Sternpunkt notwendig ist.

Diese Aufgaben werden mit dem Statormodul und dem linearen Transportsystem sowie dem Betriebsverfahren der unabhängigen Patentansprüche gelöst. Vorteilhafte Ausgestaltungen sind in den abhängigen Patentansprüchen angegeben.

Ein Statormodul eines linearen Transportsystems weist eine Mehrzahl von Antriebsspulen auf, wobei die Antriebsspulen bestromt werden können und einen Teil eines Stators eines Linearmotors bilden. Das Statormodul weist ferner eine Ansteuerungselektronik auf, wobei die Antriebsspulen mit der Ansteuerungselektronik angesteuert werden können. Die Ansteuerungselektronik umfasst zumindest ein Ansteuerungselement, wobei das Ansteuerungselement eingerichtet ist, eine Anzahl von Antriebsspulen zu bestromen. Das Ansteuerungselement weist eine Anzahl von Halbbrücken auf. Die Halbbrücken umfassen jeweils einen ersten Halbbrückenanschluss, einen zweiten Halbbrückenanschluss und einen Halbbrückenmittelpunkt, wobei die ersten Halbbrückenanschlüsse der Halbbrücken miteinander verbunden sind und wobei die zweiten Halbbrückenanschlüsse der Halbbrücken miteinander verbunden sind. Die Halbbrücken und die Antriebsspulen bilden eine Kette, wobei innerhalb der Kette abwechselnd Halbbrückenmittelpunkte und Antriebsspulen angeordnet sind. Zumindest ein Halbbrückenmittelpunkt ist mit zwei Antriebsspulen (direkt) verbunden.

Durch die Anordnung innerhalb der Kette und dadurch, dass ein Halbbrückenmittelpunkt mit zwei Antriebsspulen verbunden ist, werden Halbbrücken eingespart im Vergleich zu einer Ansteuerung der Antriebsspulen mittels Vollbrücken. Andererseits ist kein Sternpunkt vorhanden, so dass eine dort anzuschließende Elektronik entfallen kann. Somit wird durch die Anordnung von Halbbrücken und Antriebsspulen in der Kette vorteilhafterweise eine günstigere Herstellung des Statormoduls ermöglicht.

Das Statormodul weist ferner einen Kommunikationseingang auf, wobei das Statormodul eingerichtet ist, über den Kommunikationseingang Daten betreffend der Ansteuerung der Antriebsspulen zu empfangen und die Halbbrücken des Ansteuerungselements entsprechend der Daten zu schalten. Die Daten betreffend der Ansteuerung der Antriebsspulen können dabei auch Daten betreffend der Bewegung eines Schlittens umfassen.

Das Statormodul weist ferner einen Begrenzungsregler auf, wobei die Daten Stromsollwerte oder Spannungssollwerte für die Antriebsspulen umfassen. Der Begrenzungsregler ist eingerichtet, die Stromsollwerte beziehungsweise Spannungssollwerte derart zu verändern, dass eine Summe von Spannungen der Antriebsspulen eines Ansteuerungselements eine Maximalspannung nicht übersteigt.

Der Begrenzungsregler des Statormoduls ist ferner eingerichtet, eine kumulierte Summe über einen zeitlichen Spannungsverlauf der an die Antriebsspulen eines Ansteuerungselements anzulegenden Spannung zu berechnen und einen Maximalwert und einen Minimalwert der kumulierten Summe zu ermitteln. Der Begrenzungsregler ist ferner eingerichtet, zu überprüfen ob eine Differenz aus dem Maximalwert und dem Minimalwert eine Auslegungsspannung übersteigt, und für den Fall, dass die Differenz die Auslegungsspannung übersteigt, die Spannungssollwerte derart zu reduzieren, dass bei einem nochmaligen Durchlaufen der Berechnungsschritte die Differenz die Auslegungsspannung nicht mehr übersteigt.

In einer Ausführungsform des Statormoduls ist die Anzahl der Halbbrücken um eins größer als die Anzahl der Antriebsspulen. Dies stellt eine offene Kette dar, die eine einfache Ansteuerung ermöglicht.

In einer Ausführungsform des Statormoduls ist ein Anfangsmittelpunkt einer Anfangshalbbrücke mit einer ersten Antriebsspule verbunden, wobei die erste Antriebsspule mit einem Zwischenmittelpunkt einer Zwischenhalbbrücke verbunden ist. Ein Endmittelpunkt einer Endhalbbrücke ist mit einer zweiten Antriebsspule verbunden, wobei die zweite Antriebsspule mit einem Zwischenmittelpunkt einer Zwischenhalbbrücke verbunden ist. Dritte Antriebsspulen sind gemäß der Anzahl der Antriebsspulen mit den Zwischenhalbbrücken und gegebenenfalls weiteren Zwischenhalbbrücken verbunden. Je nach Anzahl der Antriebsspulen können mehrere Zwischenhalbbrücken vorgesehen sein. Die Anzahl der Zwischenhalbbrücken kann dabei um eins kleiner als die Anzahl der Antriebsspulen sein.

In einer Ausführungsform des Statormoduls ist die Anzahl der Halbbrücken identisch zur Anzahl der Antriebsspulen. Dies stellt eine geschlossene Kette dar, die einer Dreieckschaltung entsprechen kann, wenn drei Antriebsspulen vorgesehen sind.

In einer Ausführungsform des Statormoduls ist ein Anfangsmittelpunkt einer Anfangshalbbrücke mit einer ersten Antriebsspule verbunden, wobei die erste Antriebsspule mit einem Zwischenmittelpunkt einer Zwischenhalbbrücke verbunden ist. Der Anfangsmittelpunkt der Anfangshalbbrücke ist mit einer zweiten Antriebsspule verbunden, wobei die zweite Antriebsspule mit einem Zwischenmittelpunkt einer Zwischenhalbbrücke verbunden ist. Dritte Antriebsspulen gemäß der Anzahl der Antriebsspulen sind mit den Zwischenhalbbrücken und gegebenenfalls weiteren Zwischenhalbbrücken verbunden.

In einer Ausführungsform des Statormoduls ist die Anzahl der Antriebsspulen gleich drei. Dies ermöglicht im Fall der offenen Kette eine Einsparung von einem Drittel der Halbbrücken gegenüber der Ansteuerung mit Vollbrücken und im Fall der geschlossenen Kette von der Hälfte der Halbbrücken gegenüber der Ansteuerung mit Vollbrücken.

In einer Ausführungsform des Statormoduls bilden die drei durch die Ansteuereinheit ansteuerbaren Antriebsspulen ein Dreiphasensystem. Ein solches Dreiphasensystem kann einfach angesteuert werden und ermöglicht, den Linearmotor als Dreiphasenmotor zu betreiben.

In einer Ausführungsform weist das Statormodul ferner einen Steuerungsregler auf, wobei der Steuerungsregler eingerichtet ist, Stromistwerte der Antriebsspulen zu ermitteln und die Halbbrücken des Ansteuerungselements anhand der Stromistwerte zu schalten. Dadurch kann eine verbesserte Ansteuerung erreicht werden.

In einer Ausführungsform weist das Statormodul ferner Strommesser zur Ermittlung der Stromistwerte auf, wobei die Strommesser innerhalb der Halbbrücken und/oder in Reihe zu den Antriebsspulen angeordnet sind.

In einer Ausführungsform des Statormoduls erfolgt die Schaltung der Halbbrücken mittels Pulsweitenmodulation.

Die Erfindung umfasst ferner ein lineares Transportsystem mit mindestens einem der beschriebenen Statormodule.

In einer Ausführungsform weist das lineare Transportsystem ferner mindestens eine Steuereinheit auf, wobei die Steuereinheit eingerichtet ist, über einen Kommunikationsausgang Daten an einen Kommunikationseingang des Statormoduls weiterzugeben, wobei die Daten Stromsollwerte oder Spannungssollwerte für die Antriebsspulen des Statormoduls umfassen.

In einer Ausführungsform des linearen Transportsystems weist die Steuereinheit einen Begrenzer auf. Der Begrenzer ist eingerichtet, die Stromsollwerte beziehungsweise Spannungssollwerte derart zu verändern, dass eine Summe von Spannungen der Antriebsspulen eines Ansteuerungselements eine Maximalspannung nicht übersteigt.

In einer Ausführungsform des linearen Transportsystems ist der Begrenzer eingerichtet, eine kumulierte Summe über einen zeitlichen Spannungsverlauf der an die Antriebsspulen eines Ansteuerungselements anzulegenden Spannung zu berechnen, einen Maximalwert und einen Minimalwert der kumulierten Summe zu ermitteln. Der Begrenzer ist ferner eingerichtet, zu überprüfen ob eine Differenz aus dem Maximalwert und dem Minimalwert eine Auslegungsspannung übersteigt, und für den Fall, dass die Differenz die Auslegungsspannung übersteigt, die Spannungssollwerte derart zu reduzieren, dass bei einem nochmaligen Durchlaufen der Berechnungsschritte die Differenz die Auslegungsspannung nicht mehr übersteigt.

Die Erfindung umfasst ferner ein lineares Transportsystem mit mindestens einem Schlitten und einem Statormodul. Das Statormodul weist eine Mehrzahl von Antriebsspulen auf, wobei die Antriebsspulen bestromt werden können und einen Teil eines Stators eines Linearmotors bilden. Das Statormodul weist ferner eine Ansteuerungselektronik auf, wobei die Antriebsspulen mit der Ansteuerungselektronik angesteuert werden können. Die Ansteuerungselektronik umfasst zumindest ein Ansteuerungselement, wobei das Ansteuerungselement eingerichtet ist, eine Anzahl von Antriebsspulen zu bestromen. Das Ansteuerungselement weist eine Anzahl von Halbbrücken auf, wobei die Halbbrücken jeweils einen ersten Halbbrückenanschluss, einen zweiten Halbbrückenanschluss und einen Halbbrückenmittelpunkt umfassen. Die ersten Halbbrückenanschlüsse der Halbbrücken sind miteinander verbunden. Die zweiten Halbbrückenanschlüsse der Halbbrücken sind miteinander verbunden. Die Halbbrücken und die Antriebsspulen bilden eine Kette, wobei innerhalb der Kette abwechselnd Halbbrückenmittelpunkte und Antriebsspulen angeordnet sind. Zumindest ein Halbbrückenmittelpunkt ist mit zwei Antriebsspulen verbunden. Das lineare Transportsystem weist ferner eine Steuereinheitauf, wobei die Steuereinheit eingerichtet ist, über einen Kommunikationsausgang Daten an einen Kommunikationseingang des Statormoduls weiterzugeben. Die Daten umfassen Stromsollwerte oder Spannungssollwerte für die Antriebsspulen des Statormoduls. Die Steuereinheit weist einen Begrenzer auf. Der Begrenzer ist eingerichtet, die Stromsollwerte beziehungsweise Spannungssollwerte zu verändern derart, dass eine Summe von Spannungen der Antriebsspulen eines Ansteuerungselements eine Maximalspannung nicht übersteigt. Der Begrenzer ist eingerichtet, eine kumulierte Summe über einen zeitlichen Spannungsverlauf der an die Antriebsspulen eines Ansteuerungselements anzulegenden Spannung zu berechnen, einen Maximalwert und einen Minimalwert der kumulierten Summe zu ermitteln, zu überprüfen ob eine Differenz aus dem Maximalwert und dem Minimalwert eine Auslegungsspannung übersteigt, und für den Fall, dass die Differenz die Auslegungsspannung übersteigt, die Spannungssollwerte zu reduzieren derart, dass bei einem nochmaligen Durchlaufen der Berechnungsschritte die Differenz die Auslegungsspannung nicht mehr übersteigt.

Die Erfindung umfasst ferner ein Verfahren zum Betreiben eines Statormoduls eines linearen Transportsystems, bei dem Antriebsspulen des Statormoduls mittels Halbbrücken angesteuert werden und bei der Ansteuerung der Halbbrücken berücksichtigt wird, dass zumindest eine Halbbrücke mit zwei Antriebsspulen verbunden ist. Das Statormodul empfängt Daten mit Stromsollwerten oder Spannungssollwerten für die Antriebsspulen. Ferner verändert das Statormodul die Stromsollwerte beziehungsweise Spannungssollwerte derart, dass eine Summe von Spannungen der Antriebsspulen eines Ansteuerungselements eine Maximalspannung nicht übersteigt. Das Statormodul berechnet eine kumulierte Summe über einen zeitlichen Spannungsverlauf der an die Antriebsspulen eines Ansteuerungselements anzulegenden Spannung sowie einen Maximalwert und einen Minimalwert der kumulierten Summe. Ferner überprüft das Statormodul, ob eine Differenz aus dem Maximalwert und dem Minimalwert eine Auslegungsspannung übersteigt, und für den Fall, dass die Differenz die Auslegungsspannung übersteigt, reduziert das Statormodul die Spannungssollwerte derart, dass bei einem nochmaligen Durchlaufen der Berechnungsschritte die Differenz die Auslegungsspannung nicht mehr übersteigt.

Die Erfindung wird nachfolgend anhand von Ausführungsbeispielen und unter Bezugnahme auf Figuren näher erläutert. Dabei zeigen jeweils in schematischer Darstellung
- Fig. 1: ein Statormodul eines linearen Transportsystems;
- Fig. 2: einen Querschnitt eines linearen Transportsystems;
- Fig. 3: ein Ansteuerungselement einer Ansteuerungselektronik;
- Fig. 4: ein weiteres Ansteuerungselement einer Ansteuerungselektronik;
- Fig. 5: ein weiteres Ansteuerungselement einer Ansteuerungselektronik;
- Fig. 6: eine Ansteuerungselektronik;
- Fig. 7: ein weiteres Ansteuerungselement einer Ansteuerungselektronik;
- Fig. 8: ein weiteres Ansteuerungselement einer Ansteuerungselektronik;
- Fig. 9: ein weiteres Ansteuerungselement einer Ansteuerungselektronik;
- Fig. 10: eine Ansteuerung der Antriebsspulen ohne nötige Begrenzung;
- Fig. 11: eine Ansteuerung der Antriebsspulen mit nötiger Begrenzung;
- Fig. 12: eine Anpassung von Sollwerten bei nötiger Begrenzung;
- Fig. 13: eine Steuerung;
- Fig. 14: einen Begrenzer;
- Fig. 15: einen Modulator.

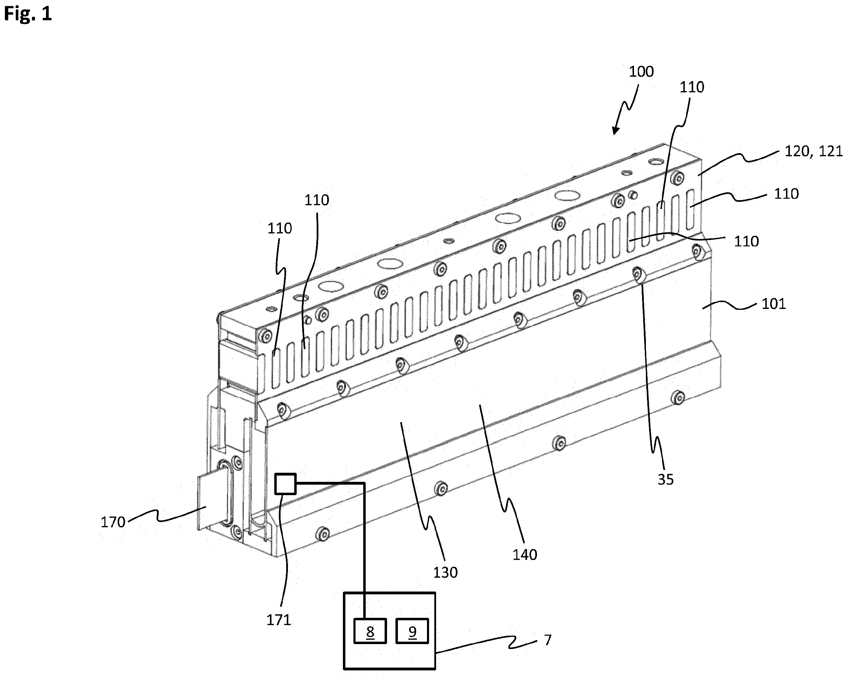

Fig. 1 zeigt eine Ansicht eines Statormoduls 100 für ein lineares Transportsystem. Das Statormodul 100 weist Antriebsspulen 110 auf, die einen Teil eines Stators 121 eines Linearmotors 120 bilden. Das Statormodul 100 weist ferner ein Gehäuse 101 auf. Innerhalb des Gehäuses 101 ist eine Ansteuerungselektronik 130 angeordnet. Die Ansteuerungselektronik 130 weist zumindest ein Ansteuerungselement 140 auf.

Ferner ist ein optionaler Kommunikationseingang 171 am Statormodul 100 angeordnet, der mit einem Kommunikationsausgang 8 einer Steuereinheit 7 verbunden ist. Darüber hinaus weist das Statormodul 100 einen Modulanschluss 170 auf, mit dem ein Kommunikationsbus zu einem weiteren, in Fig. 1 nicht gezeigten Statormodul aufgebaut werden kann. Über den Modulanschluss 170, den Kommunikationseingang 171 sowie den Kommunikationsausgang 8 mit der Steuereinheit 7 verbunden.

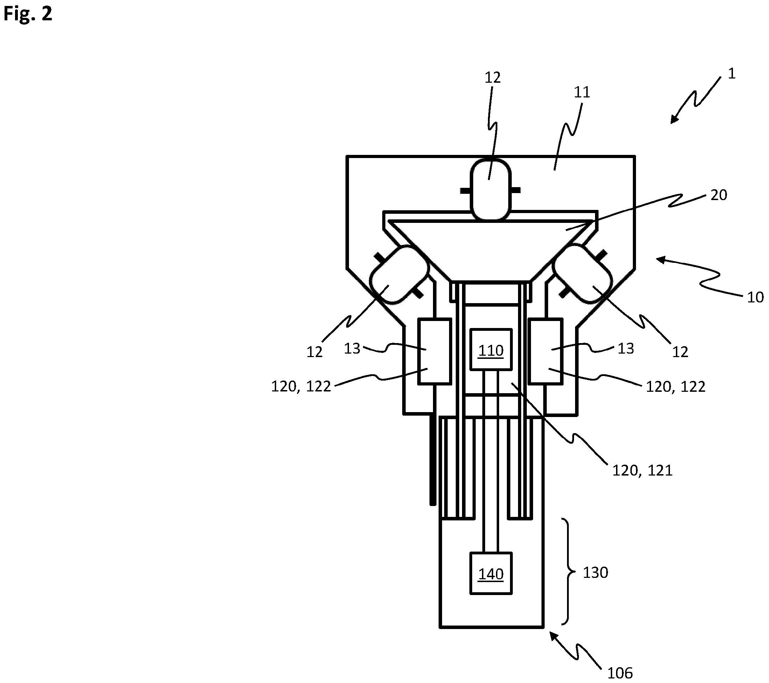

Fig. 2 zeigt einen Querschnitt durch ein lineares Transportsystem 1. Das Statormodul 100 ist wie in Fig. 1 gezeigt ausgestaltet. Ferner ist eine Führungsschiene 20 gezeigt, die am Statormodul 100 befestigt Teil des Statormoduls 100 sein kann. Ein Schlitten 10 ist beweglich an der Führungsschiene 20 angeordnet und kann entlang des Statormoduls 100 bewegt werden. Der Schlitten 10 weist einen Rahmen 11 auf und am Rahmen 11 angeordnete Laufrollen 12, die an der Führungsschiene 20 abrollen können. Am Rahmen 11 des Schlittens 10 ist ferner eine Permanentmagnetanordnung 13 angeordnet, die einen Läufer 122 des Linearmotors 120 bildet. Gegebenenfalls können mehrere Statormodule 100 in einer Reihe angeordnet werden und so zusammen mit den zugehörigen Führungsschienen eine umlaufende Bahn für den Schlitten 10 bilden. Ferner kann auch mehr als ein Schlitten 10 vorgesehen sein.

Die in Fig. 2 gezeigte Antriebsspule 110 ist mit einem Ansteuerungselement 140 der Ansteuerungselektronik 130 verbunden, wobei das Ansteuerungselement 140 Teil der Ansteuerungselektronik 130 ist. Die Antriebsspule 100 kann ebenfalls als Teil des Ansteuerungselements 140 aufgefasst werden oder außerhalb des Ansteuerungselements 140 angeordnet sein.

Mittels des Ansteuerungselements 140 kann eine Anzahl von Antriebsspulen 110 bestromt werden, wobei gegebenenfalls mehrere Ansteuerungselemente 140 im Statormodul 100 vorgesehen sind, um alle Antriebsspulen 110 des Statormoduls 100 zu Bestromen. Alle Ansteuerungselemente 140 sind Teil der Ansteuerungselektronik 130 und dienen der Ansteuerung der Antriebsspulen 110.

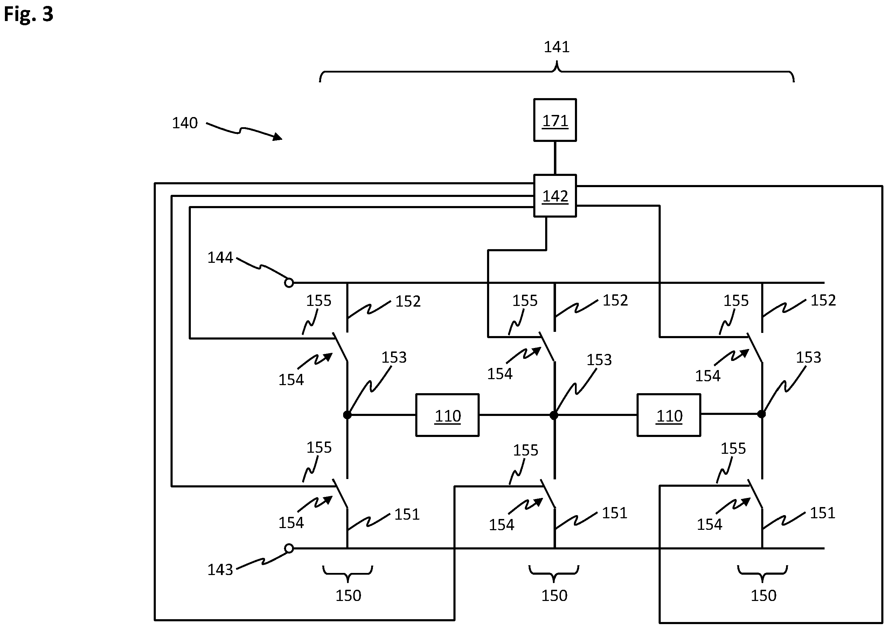

Fig. 3 zeigt eine elektrische Schaltung eines Ansteuerungselements 140. Das Ansteuerungselement 140 ist eingerichtet, eine Anzahl von Antriebsspulen 110 zu Bestromen und weist eine Anzahl von Halbbrücken 150 auf, wobei im Ausführungsbeispiel der Fig. 3 drei Halbbrücken 150 und zwei Antriebsspulen 110 gezeigt sind. Die Halbbrücken 150 umfassen jeweils einen ersten Halbbrückenanschluss 151, einen zweiten Halbbrückenanschluss 152 und einen Halbbrückenmittelpunkt 153. Die ersten Halbbrückenanschlüsse 151 der Halbbrücken 150 sind miteinander verbunden. Die zweiten Halbbrückenanschlüsse 152 der Halbbrücken 150 sind miteinander verbunden. Die Halbbrücken 150 und die Antriebsspulen 110 bilden eine Kette 141, wobei innerhalb der Kette 141 abwechselnd Halbbrückenmittelpunkte 153 und Antriebsspulen 110 angeordnet sind. Zumindest ein Halbbrückenmittelpunkt 153 (Der Halbbrückenmittelpunkt zwischen den Antriebsspulen 110) ist mit zwei Antriebsspulen 110 verbunden.

Die ersten Halbbrückenanschlüsse 151 sind mit einem ersten Spannungseingang 143 verbunden. Die zweiten Halbbrückenanschlüsse 152 sind mit einem zweiten Spannungseingang 144 verbunden. Zwischen dem ersten Spannungseingang 143 und dem zweiten Spannungseingang 144 kann eine Gleichspannung angelegt werden, beispielsweise 48 Volt.

Die Halbbrücken 150 weisen jeweils zwischen dem ersten Halbbrückenanschluss 151 und dem Halbbrückenmittelpunkt 153 sowie zwischen dem zweiten Halbbrückenanschluss 152 und dem Halbbrückenmittelpunkt 153 einen Schalter 154 auf, wobei jeder Schalter 154 einen Schaltereingang 155 aufweist. Die Schalter 154 sind durch ein am Schaltereingang 155 anliegendes Signal, beispielsweise eine Spannung, schaltbar. Das bedeutet, dass die Schalter 154 abgängig vom über den Schaltereingang 155 bereitgestellten Signal geschlossen oder offen sind. Die Schalter 154 können dabei als Transistoren und insbesondere als MOSFETs ausgestaltet sein. Alternativ können die Schalter 154 als IGBTs oder HEMTs ausgestaltet sein.

Die Schaltereingänge 155 sind mit einer Steuerung 142 verbunden, wobei durch die Steuerung 142 Signale ausgeben werden können, mit denen die Schalter 154 geöffnet beziehungsweise geschlossen werden können. Dies ermöglicht, vorgegebene Spannungsverläufe an die Antriebsspulen 110 anzulegen, wobei die Schalter 154 gegebenenfalls mittels Pulsweitenmodulation geschlossen beziehungsweise geöffnet werden. Die Steuerung 142 kann, wie in Fig. 3 dargestellt, mit dem Kommunikationseingang 171 verbunden sein.

Im Gegensatz zu einer Ansteuerung der Antriebsspulen 110 mittels Vollbrücken kann durch das in Fig. 3 gezeigte Ansteuerungselement 140 bei der Ansteuerung zweier Antriebsspulen 110 eine Halbbrücke 150 eingespart werden. Somit wären insgesamt nur drei Viertel der Halbbrücken 150 verglichen mit einer Ansteuerung mittels Vollbrücken nötig, wodurch sich die Produktionskosten des Statormoduls 100 senken lassen. Weitere, im Folgenden gezeigte Ansteuerungselemente 140 sehen andere Anzahlen von Halbbrücken 150 und/oder Antriebsspulen 110 vor, wobei immer mindestens ein Halbbrückenmittelpunkt 153 mit zwei Antriebsspulen 110 verbunden ist und die Antriebsspulen in Reihe geschaltet sind.

Die Halbbrücken 150 können auch als Mehrlevelschaltung ausgeführt sein, so dass beispielsweise jeweils mehr als ein Schalter 154 zwischen dem ersten Halbbrückenanschluss 151 und dem Halbbrückenmittelpunkt 153 sowie zwischen dem zweiten Halbbrückenanschluss 152 und dem Halbbrückenmittelpunkt 153 angeordnet sind. Dies ermöglicht eine Abstufung der geschalteten Spannung. Hierbei kann beispielsweise erst auf 24 Volt und anschließend auf 48 Volt geschaltet werden, so dass zu starke Spannungssprünge vermieden werden können, und die Bauteile kostengünstiger ausgeführt werden können.

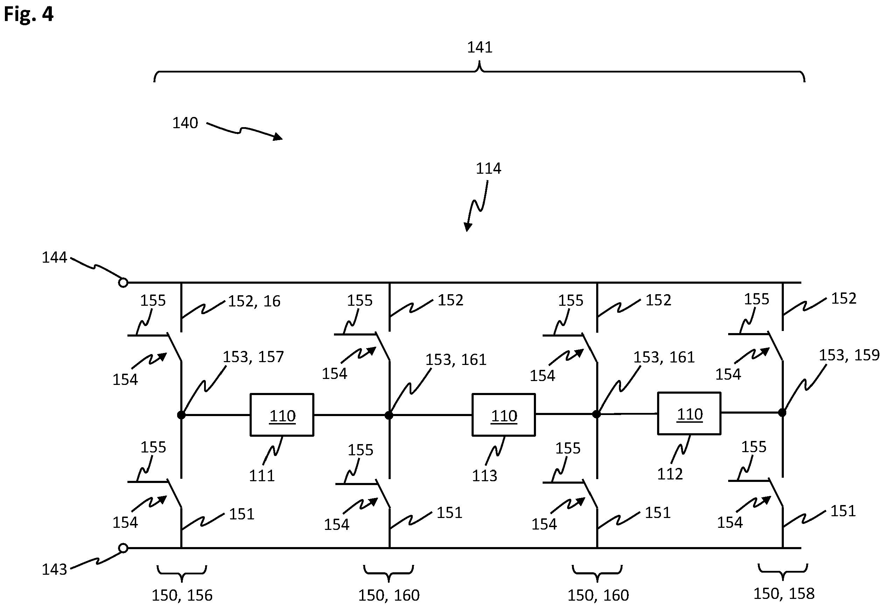

Fig. 4 zeigt eine elektrische Schaltung eines weiteren Ansteuerungselements 140, das dem Ansteuerungselement 140 der Fig. 3 entspricht, sofern im Folgenden keine Unterschiede beschrieben sind. Um die Übersichtlichkeit zu erhöhen, wurde auf die Darstellung der Steuerung 142 und des Kommunikationseingangs 171 verzichtet, diese können jedoch ebenfalls vorgesehen sein.

Das Ansteuerungselement 140 umfasst vier Halbbrücken 150 und drei Antriebsspulen 110. Die Kette 141 wurde also um jeweils eine Halbbrücke 150 und eine Antriebsspule 110 verlängert. Dies kann grundsätzlich wiederholt werden, so dass die Anzahl der Halbbrücken 150 immer um eins größer ist als die Anzahl der Antriebsspulen 110. Die Kette 141 ist dabei eine offene Kette.

Ein Anfangsmittelpunkt 157 einer Anfangshalbbrücke 156 ist mit einer ersten Antriebsspule 111 verbunden. Die erste Antriebsspule 111 ist mit einem Zwischenmittelpunkt 161 einer Zwischenhalbbrücke 160 verbunden. Ein Endmittelpunkt 159 einer Endhalbbrücke 158 ist mit einer zweiten Antriebsspule 112 verbunden. Die zweite Antriebsspule 112 ist mit einem Zwischenmittelpunkt 161 einer Zwischenhalbbrücke 160 verbunden. Eine dritte Antriebsspule 113 ist mit zwei Zwischenmittelpunkten 161 verbunden. Es können auch mehr als drei Antriebsspulen 110 vorgesehen sein. In diesem Fall sind weitere dritte Antriebsspulen 113 gemäß der Anzahl der Antriebsspulen 110 mit den Zwischenhalbbrücken 160 und gegebenenfalls weiteren Zwischenhalbbrücken 160 verbunden.

Im Gegensatz zu einer Ansteuerung der Antriebsspulen 110 mittels Vollbrücken kann durch das in Fig. 4 gezeigte Ansteuerungselement 140 bei der Ansteuerung dreier Antriebsspulen 110 zwei Halbbrücken 150 eingespart werden. Somit wären insgesamt nur zwei Drittel der Halbbrücken 150 verglichen mit einer Ansteuerung mittels Vollbrücken nötig, wodurch sich die Produktionskosten des Statormoduls 100 senken lassen. Wird die Kette 141 um weitere Antriebsspulen 110 verlängert, kann eine weitere Einsparung an Halbbrücken 150 erfolgen. Da die Ansteuerung jedoch mit der Anzahl der Antriebsspulen 110 in einem Ansteuerungselement 140 zunehmend komplexer wird, stellt das in Fig. 4 gezeigte Ansteuerungselement 140 einen guten Kompromiss hinsichtlich der Kosteneinsparung und der Komplexität der Ansteuerung dar.

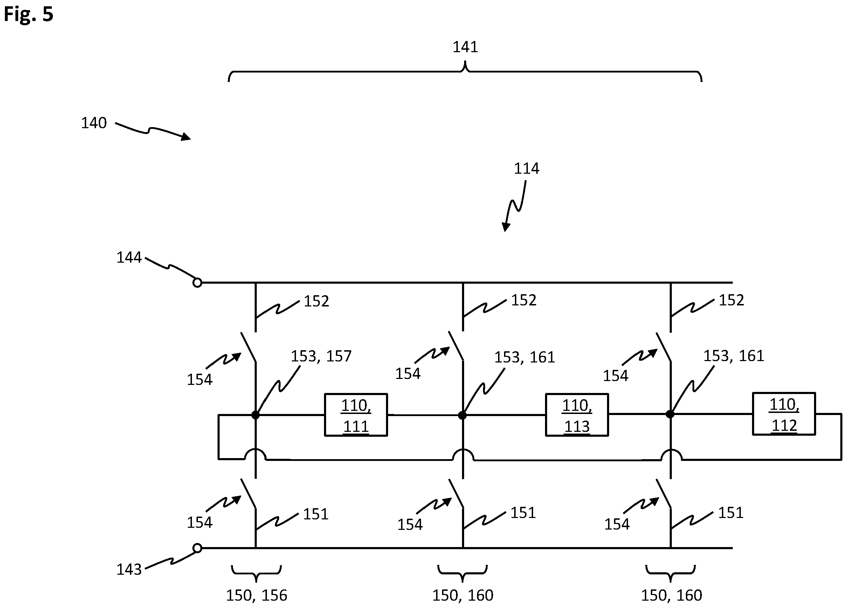

Fig. 5 zeigt eine elektrische Schaltung eines weiteren Ansteuerungselements 140, das dem Ansteuerungselement 140 der Fig. 3 entspricht, sofern im Folgenden keine Unterschiede beschrieben sind. Um die Übersichtlichkeit zu erhöhen, wurde auf die Darstellung der Steuerung 142 und des Kommunikationseingangs 171 verzichtet, diese können jedoch ebenfalls vorgesehen sein.

Das Ansteuerungselement 140 umfasst drei Halbbrücken 150 und drei Antriebsspulen 110. Die Kette 141 wurde also um eine Antriebsspule 110 verlängert. Dies kann grundsätzlich wiederholt werden, so dass die Anzahl der Halbbrücken 150 immer identisch ist zur Anzahl der Antriebsspulen 110. Die Kette 141 ist dabei eine geschlossene Kette.

Ein Anfangsmittelpunkt 157 einer Anfangshalbbrücke 156 ist mit einer ersten Antriebsspule 111 verbunden. Die erste Antriebsspule 111 ist mit einem Zwischenmittelpunkt 161 einer Zwischenhalbbrücke 160 verbunden. Eine zweite Antriebsspule 112 ist ebenfalls mit dem Anfangsmittelpunkt 157 verbunden. Die zweite Antriebsspule 112 ist ebenfalls mit einem Zwischenmittelpunkt 161 einer Zwischenhalbbrücke 160 verbunden. Eine dritte Antriebsspule 113 ist mit zwei Zwischenmittelpunkten 161 verbunden. Es können auch mehr als drei Antriebsspulen 110 vorgesehen sein. In diesem Fall sind weitere dritte Antriebsspulen 113 gemäß der Anzahl der Antriebsspulen 110 mit den Zwischenhalbbrücken 160 und gegebenenfalls weiteren Zwischenhalbbrücken 160 verbunden. In diesem Ausführungsbeispiel bilden die Antriebsspulen 110 eine Dreiecksschaltung.

In einem Ausführungsbeispiel bilden die drei Antriebsspulen 110 ein Dreiphasensystem 114. Insbesondere die in den Fig. 4 und 5 gezeigten Ansteuerungselemente 140 beinhalten ein Dreiphasensystem 114.

In einem Ausführungsbeispiel weist das Statormodul 100 den Kommunikationseingang 171 auf, wobei das Statormodul 100 eingerichtet ist, über den Kommunikationseingang 171 Daten betreffend die Ansteuerung der Antriebsspulen 110 zu empfangen und die Halbbrücken 150 des Ansteuerungselements 140 entsprechend der Daten zu schalten. Insbesondere die Steuerung 142 kann zur Durchführung dieses Verfahrens ausgebildet sein.

Im Gegensatz zu einer Ansteuerung der Antriebsspulen 110 mittels Vollbrücken können durch das in Fig. 5 gezeigte Ansteuerungselement 140 bei der Ansteuerung dreier Antriebsspulen 110 drei Halbbrücken 150 eingespart werden. Für jede weitere Antriebsspule 110 kann eine weitere Halbbrücke 150 eingespart werden. Somit wären insgesamt nur die Hälfte der Halbbrücken 150 verglichen mit einer Ansteuerung mittels Vollbrücken nötig, wodurch sich die Produktionskosten des Statormoduls 100 senken lassen. Da die Ansteuerung jedoch mit der Anzahl der Antriebsspulen 110 in einem Ansteuerungselement 140 zunehmend komplexer wird, stellt das in Fig. 5 gezeigte Ansteuerungselement 140 ebenfalls einen guten Kompromiss hinsichtlich der Kosteneinsparung und der Komplexität der Ansteuerung dar.

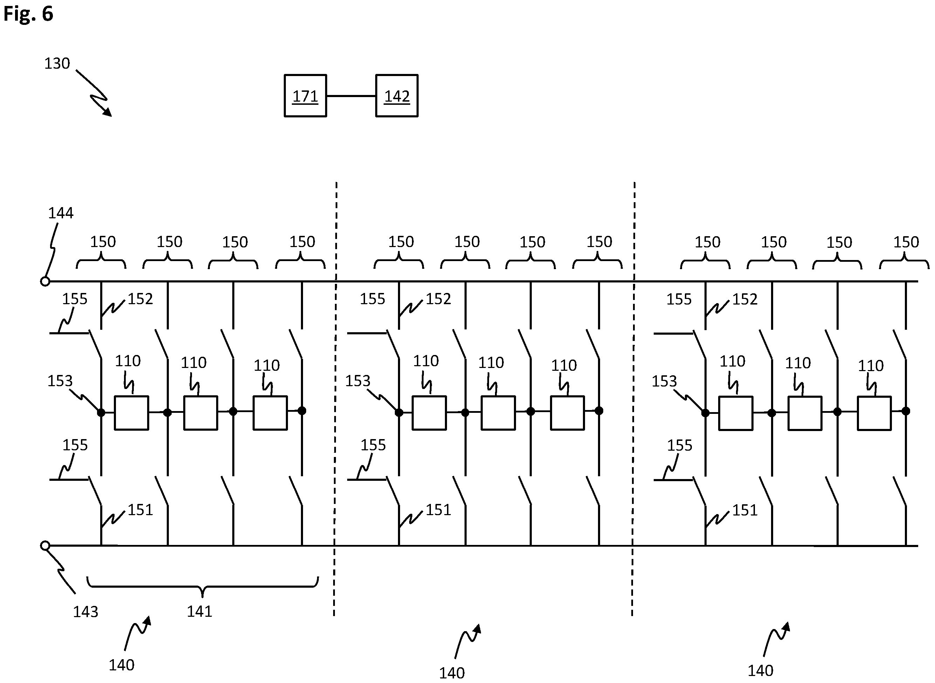

Fig. 6 zeigt eine elektrische Schaltung einer Ansteuerungselektronik 130. Um die Übersichtlichkeit zu erhöhen, wurde auf die Darstellung der Verbindungen der Schaltereingänge 155 mit der Steuerung 142 verzichtet, diese können jedoch ebenfalls vorgesehen sein. Die Ansteuerungselektronik 130 umfasst drei Anschaltelemente 140, die jeweils wie das Anschaltelement 140 der Fig. 4 ausgestaltet sind. Es können alternativ auch andere Ausgestaltungen vorgesehen sein, beispielsweise wie in den Fig. 3 oder 5 gezeigt. Grundsätzlich kann die Anzahl der Anschalteinheiten 140 und die Anzahl der Antriebsspulen 110 pro Anschalteinheit 140 derart bemessen sein, dass in einer der Fig. 6 entsprechenden Anordnung alle Antriebsspulen 110 des Statormoduls mittels der Ansteuerungselektronik 130 angesteuert werden können. Beispielsweise kann das Statormodul 75 Antriebsspulen 110 und 25 Anschaltelemente 140 umfassen.

Die ersten Halbbrückenanschlüsse 151 aller Anschaltelemente 140 sind dabei miteinander und dem ersten Spannungseingang 143 verbunden, während die zweiten Halbbrückenanschlüsse 152 aller Anschaltelemente 140 miteinander und dem zweiten Spannungseingang 144 verbunden sind.

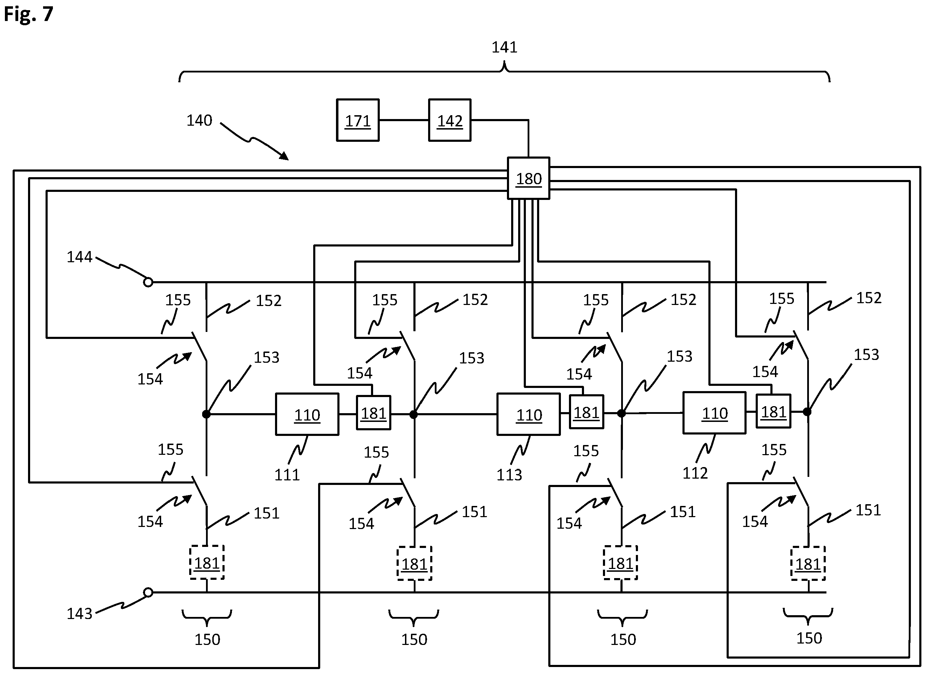

Fig. 7 zeigt ein weiteres Ansteuerungselement 140, welches dem Ansteuerungselement 140 der Fig. 4 entspricht, sofern im Folgenden keine Unterschiede beschrieben sind. Die Steuerung 142 ist nicht direkt mit den Schaltereingängen 155 verbunden, sondern über einen Steuerungsregler 180. Der Steuerungsregler ist mit Strommessern 181 verbunden, die jeweils zu den Antriebsspulen 110 in Reihe geschaltet sind. Alternativ können die Strommesser 181 auch innerhalb der Halbbrücken 150 angeordnet sein. Dies ist gestrichelt ebenfalls in Fig. 7 dargestellt. Die gestrichelt dargestellten Strommesser 181 sind dabei an den ersten Halbbrückenanschlüssen 151 angeordnet. Alternativ, jedoch nicht in Fig. 7 dargestellt, können die Strommesser 181 auch an den zweiten Halbbrückenanschlüssen 152 angeordnet werden. Der Steuerungsregler 180 ist eingerichtet, Stromistwerte der Antriebsspulen 110 zu ermitteln und die Halbbrücken 150 des Ansteuerungselements 140 anhand der Stromistwerte zu schalten. In einem alternativen, nicht gezeigten, Ausführungsbeispiel sind keine Strommesser 181 vorgesehen und die Stromistwerte werden anderweitig bestimmt, beispielsweise über Strommessungen am ersten Spannungseingang 143 beziehungsweise am zweiten Spannungseingang 144.

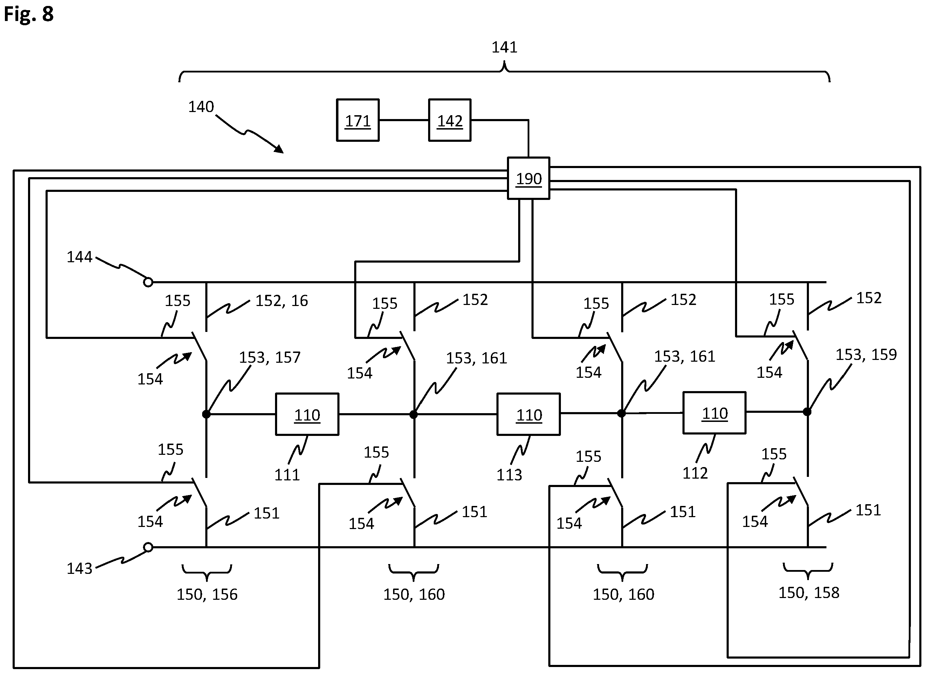

Fig. 8 zeigt ein weiteres Ansteuerungselement 140, welches dem Ansteuerungselement 140 der Fig. 4 entspricht, sofern im Folgenden keine Unterschiede beschrieben sind. Die Steuerung 142 ist nicht direkt mit den Schaltereingängen 155 verbunden, sondern über einen Begrenzungsregler 190. Der Begrenzungsregler 190 ist eingerichtet, die Stromsollwerte beziehungsweise Spannungssollwerte derart zu verändern, dass eine Summe von Spannungen der Antriebsspulen 110 eines Ansteuerungselements 140 eine Maximalspannung nicht übersteigt. Dazu kann vorgesehen sein, wie in Zusammenhang mit Fig. 7 gezeigt und erläutert, Stromistwerte mittels Strommessern 181 zu ermitteln und eine Regelung mittels Steuerungsregler 180 vorzusehen, wobei der Steuerungsregler 180 Teil des Begrenzungsreglers 190 sein kann oder vor oder nach dem Begrenzungsregler 190 angeordnet sein kann.

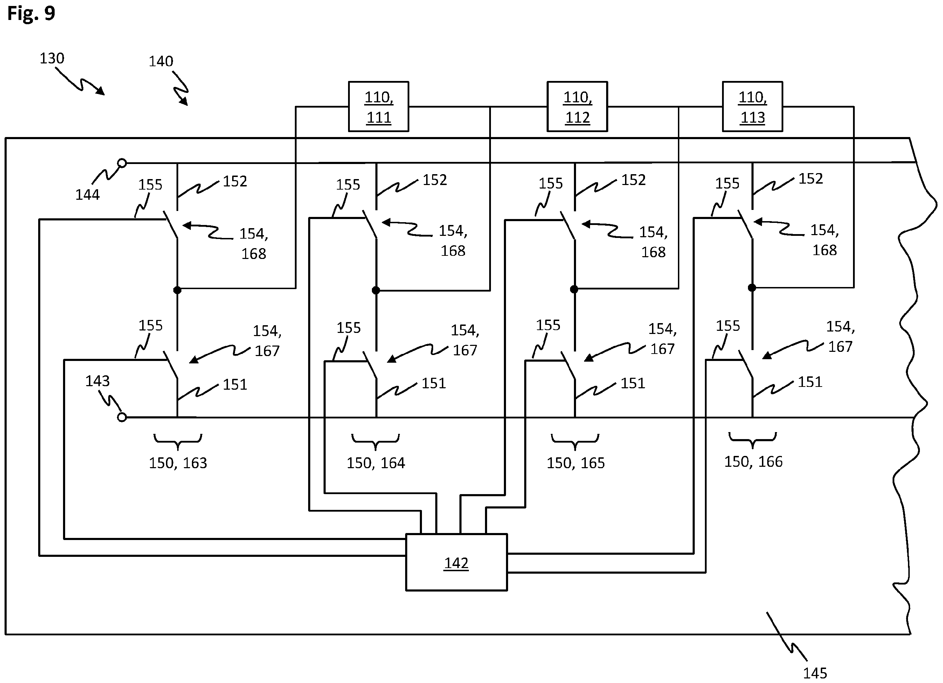

Fig. 9 zeigt ein Ansteuerelement 140 einer Ansteuerungselektronik 130. Das Ansteuerelement 140 entspricht dabei dem Ansteuerungselement der Fig. 4, sofern im Folgenden keine Unterschiede beschrieben sind. Die Antriebsspulen 110 sind nicht Teil des Ansteuerungselements 140, sondern außerhalb angeordnet und mittels Leitungen verbunden. Beispielsweise kann das Ansteuerungselement 140 auf einer Platine 145 angeordnet sein, wobei auf der Platine Steckanschlüsse oder andere Anschlüsse (in Fig. 9 nicht gezeigt) für die Antriebsspulen 110 vorgesehen sind.

Eine Steuerung 142 ist wieder mit den Schaltereingängen 155 der Halbbrücken 150 verbunden. Eine erste Antriebsspule 111 ist zwischen einer ersten Halbbrücke 163 und einer zweiten Halbbrücke 164 angeordnet. Eine zweite Antriebsspule 112 ist zwischen einer zweiten Halbbrücke 164 und einer dritten Halbbrücke 165 angeordnet. Eine dritte Antriebsspule 113 ist zwischen einer dritten Halbbrücke 165 und einer vierten Halbbrücke 166 angeordnet. Die den ersten Halbbrückenanschlüssen 151 zugewandten Schalter 154 können auch als erste Schalter 167 aufgefasst werden. Die jeweils anderen Schalter 154 können als zweite Schalter 168 aufgefasst werden. Die Nummerierung der Antriebsspulen 110 unterscheidet sich dabei von der Nummerierung in Fig. 4. Die in Fig. 9 gewählte Nummerierung gilt auch für die folgenden Ausführungen bezüglich der Begrenzungsregler, die im Zusammenhang mit den folgenden Figuren erläutert werden.

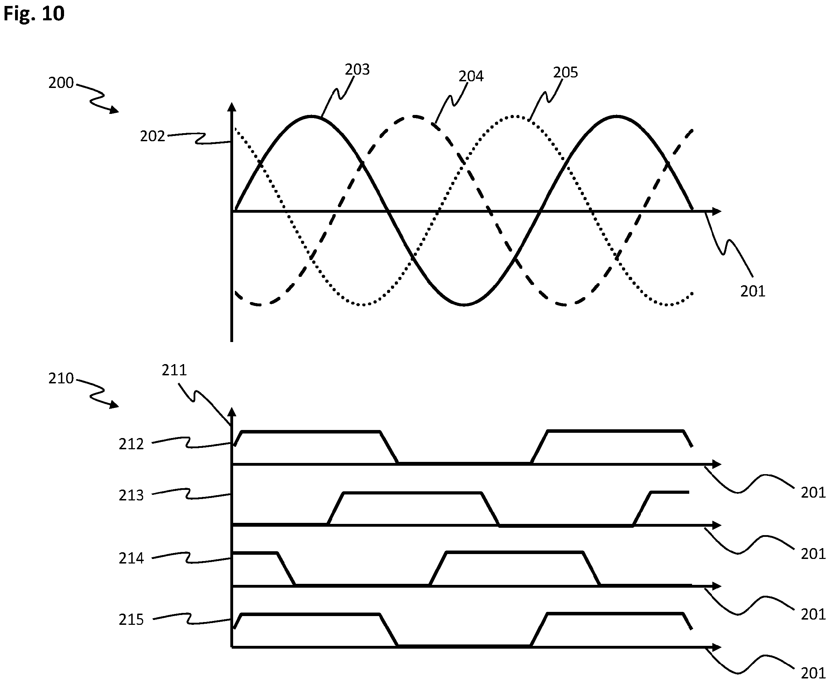

Fig. 10 zeigt ein erstes Diagramm 200, in dem anzulegende Spannungsverläufe der an den Antriebsspulen 110 anliegenden Spannungen gezeigt sind. Das erste Diagramm 200 weist dabei eine Zeitachse 201 und eine Spannungsachse 202 auf. Ein erster anzulegender Spannungsverlauf 203 entspricht der an der ersten Antriebsspule 111 anzulegenden Spannung. Ein zweiter anzulegender Spannungsverlauf 204 entspricht der an der zweiten Antriebsspule 112 anzulegenden Spannung. Ein dritter anzulegender Spannungsverlauf 205 entspricht der an der dritten Antriebsspule 113 anzulegenden Spannung. Die ersten, zweiten beziehungsweise dritten Spannungsverläufe 203, 204, 205 sind dabei jeweils sinusförmig und um 120 Grad phasenverschoben, so dass sich ein klassisches Dreiphasensystem 114 ergibt. Gegebenenfalls können die ersten, zweiten beziehungsweise dritten Spannungsverläufe 203, 204, 205 auch eine andere Phasenbeziehung aufweisen.

Fig. 10 zeigt außerdem ein zweites Diagramm 210, in dem Schaltzeitverläufe der an den ersten Schaltern 167 der Halbbrücken 150 der Fig. 9 anliegende Schaltsignale gezeigt sind. Das Diagramm weist ebenfalls eine Zeitachse 201 und eine Signalachse 211 auf. Ein erster Schaltzeitverlauf 212 entspricht dabei dem am ersten Schalter 167 der ersten Halbbrücke 163 angelegten Schaltsignal. Ein zweiter Schaltzeitverlauf 213 entspricht dabei dem am ersten Schalter 167 der zweiten Halbbrücke 164 angelegten Schaltsignal. Ein dritter Schaltzeitverlauf 214 entspricht dabei dem am ersten Schalter 167 der dritten Halbbrücke 165 angelegten Schaltsignal. Ein vierter Schaltzeitverlauf 215 entspricht dabei dem am ersten Schalter 167 der vierten Halbbrücke 166 angelegten Schaltsignal. Das am zweiten Schalter 168 der jeweiligen Halbbrücke 150 angelegte Schaltsignal ist dabei jeweils genau entgegengesetzt zum am ersten Schalter 167 der jeweiligen Halbbrücke 150 angelegten Schaltsignal, so dass immer entweder der erste Schalter 167 oder der zweite Schalter 168 einer jeden Halbbrücke 150 geschlossen ist, und gleichzeitig der zweite Schalter 168 beziehungsweise der erste Schalter 167 geöffnet ist.

Die Höhe des ersten Schaltzeitverlaufs 212, des zweiten Schaltzeitverlaufs 213, des dritten Schaltzeitverlaufs 214 und des vierten Schaltzeitverlaufs 215 kann dabei mittels Pulsweitenmodulation eingestellt werden, wobei ein höheres Signal im ersten Schaltzeitverlauf 212, im zweiten Schaltzeitverlauf 213, im dritten Schaltzeitverlauf 214 oder im vierten Schaltzeitverlauf 215 einer jeweils größeren Pulsbreite in der Pulsweitenmodulation entspricht.

Im klassischen Dreiphasensystem 114, dessen Ansteuerung in Fig. 10 also gezeigt ist, sind die anzulegenden Spannungen derart phasenverschoben, dass eine Begrenzung nicht zwingend erforderlich ist. Ferner kann dem ersten Schaltzeitverlauf 212 und dem vierten Schaltzeitverlauf 215, die identisch sind, entnommen werden, dass die Ansteuerung mittels des in Fig. 5 gezeigten Ansteuerungselements 140 ebenfalls funktioniert, wenn die vierte Halbbrücke 166 weggelassen wird und die dritte Antriebsspule 113 (der Fig. 9) ebenfalls mit der ersten Halbbrücke 163 verbunden wird.

Werden die Schalter 154 wie beschrieben geschaltet, dann liegen an den Antriebsspulen 110 Spannungen an, deren Verlauf identisch ist zu den jeweiligen anzulegenden Spannungen.

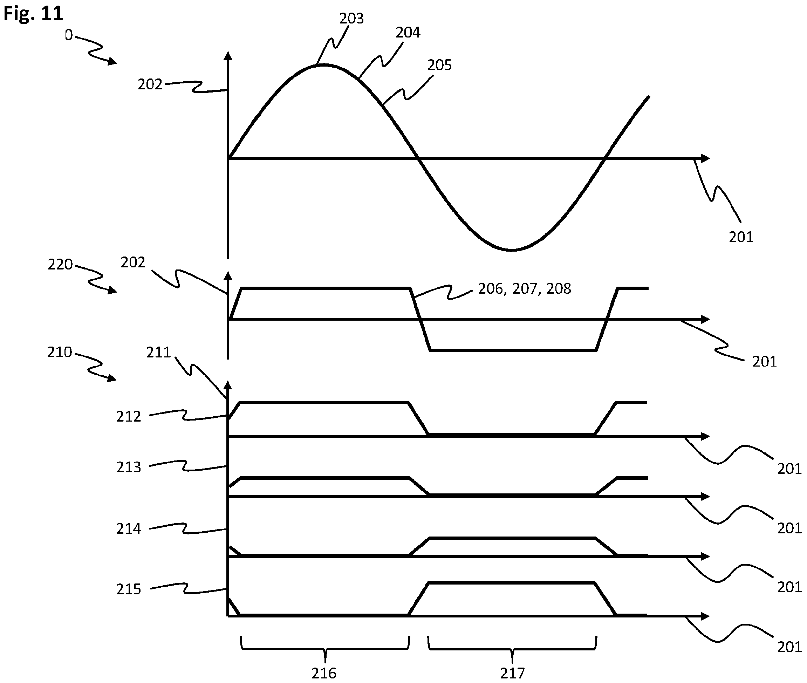

Fig. 11 zeigt ebenfalls ein erstes Diagramm 200, in dem anzulegende Spannungsverläufe der an den Antriebsspulen 110 anliegenden Spannungen gezeigt sind. Das erste Diagramm 200 weist dabei eine Zeitachse 201 und eine Spannungsachse 202 auf. Ein erster anzulegender Spannungsverlauf 203 entspricht der an der ersten Antriebsspule 111 anzulegenden Spannung. Ein zweiter anzulegender Spannungsverlauf 204 entspricht der an der zweiten Antriebsspule 112 anzulegenden Spannung. Ein dritter anzulegender Spannungsverlauf 205 entspricht der an der dritten Antriebsspule 113 anzulegenden Spannung. Die ersten, zweiten beziehungsweise dritten Spannungsverläufe 203, 204, 205 sind dabei jeweils sinusförmig und ihre Phase ist identisch.

Fig. 11 zeigt außerdem ebenfalls ein zweites Diagramm 210, in dem Schaltzeitverläufe der an den ersten Schaltern 167 der Halbbrücken 150 der Fig. 9 anliegenden Schaltsignale gezeigt sind. Das Diagramm weist ebenfalls eine Zeitachse 201 und eine Signalachse 211 auf. Ein erster Schaltzeitverlauf 212 entspricht dabei dem am ersten Schalter 167 der ersten Halbbrücke 163 angelegten Schaltsignal. Ein zweiter Schaltzeitverlauf 213 entspricht dabei dem am ersten Schalter 167 der zweiten Halbbrücke 164 angelegten Schaltsignal. Ein dritter Schaltzeitverlauf 214 entspricht dabei dem am ersten Schalter 167 der dritten Halbbrücke 165 angelegten Schaltsignal. Ein vierter Schaltzeitverlauf 215 entspricht dabei dem am ersten Schalter 167 der vierten Halbbrücke 166 angelegten Schaltsignal. Das am zweiten Schalter 168 der jeweiligen Halbbrücke 150 angelegte Schaltsignal ist dabei jeweils genau entgegengesetzt zum am ersten Schalter 167 der jeweiligen Halbbrücke 150 angelegten Schaltsignal, so dass immer entweder der erste Schalter 167 oder der zweite Schalter 168 einer jeden Halbbrücke 150 geschlossen ist, und gleichzeitig der zweite Schalter 168 beziehungsweise der erste Schalter 167 geöffnet ist.

Dabei ist die Höhe des ersten Schaltzeitverlaufs 212 in einem ersten Bereich 216 der Zeitachse 201 am größten, die Höhe des zweiten Schaltzeitverlaufs 213 ist im ersten Bereich 216 kleiner als die des ersten Schaltzeitverlaufs 212. Das dritte Schaltzeitverlauf 214 und das vierte Schaltzeitverlauf 215 sind im ersten Bereich jeweils Null. In einem zweiten Bereich 217 der Zeitachse 201 sind der erste Schaltzeitverlauf 212 und der zweite Schaltzeitverlauf 213 jeweils Null, während der vierte Schaltzeitverlauf 215 am größten ist und der dritte Schaltzeitverlauf 214 kleiner ist als der vierte Schaltzeitverlauf 215.

Die Höhe des ersten Schaltzeitverlaufs 212, des zweiten Schaltzeitverlaufs 213, des dritten Schaltzeitverlaufs 214 und des vierten Schaltzeitverlaufs 215 kann dabei mittels Pulsweitenmodulation eingestellt werden, wobei ein höheres Signal im ersten Schaltzeitverlauf 212, im zweiten Schaltzeitverlauf 213, im dritten Schaltzeitverlauf 214 oder im vierten Schaltzeitverlauf 215 einer jeweils größeren Pulsbreite in der Pulsweitenmodulation entspricht.

Im ersten Bereich 216 und im zweiten Bereich 217 weisen der erste Schaltzeitverlauf 212, der zweite Schaltzeitverlauf 213, der dritte Schaltzeitverlauf 214 und der vierte Schaltzeitverlauf 215 jeweils ein Plateau auf. In den Bereichen der Plateaus müsste eigentlich eine größere Spannung an die Antriebsspulen 110 angelegt werden, durch die über den ersten Spannungseingang 143 und den zweiten Spannungseingang 144 ist die maximale Spannung jedoch durch einen Begrenzungsregler begrenzt worden.

Fig. 11 zeigt außerdem ein drittes Diagramm 220, bei dem eine Spannungsachse 202 über einer Zeitachse 201 aufgetragen ist und in dem ein erster resultierender Spannungsverlauf 206, ein zweiter resultierender Spannungsverlauf 207 und ein dritter resultierender Spannungsverlauf 208 dargestellt sind. Aufgrund des Eingreifen des Begrenzungsreglers ist der erste resultierende Spannungsverlauf 206, der zweite resultierende Spannungsverlauf 207 und der dritte resultierende Spannungsverlauf 208 jeweils ebenfalls gekappt.

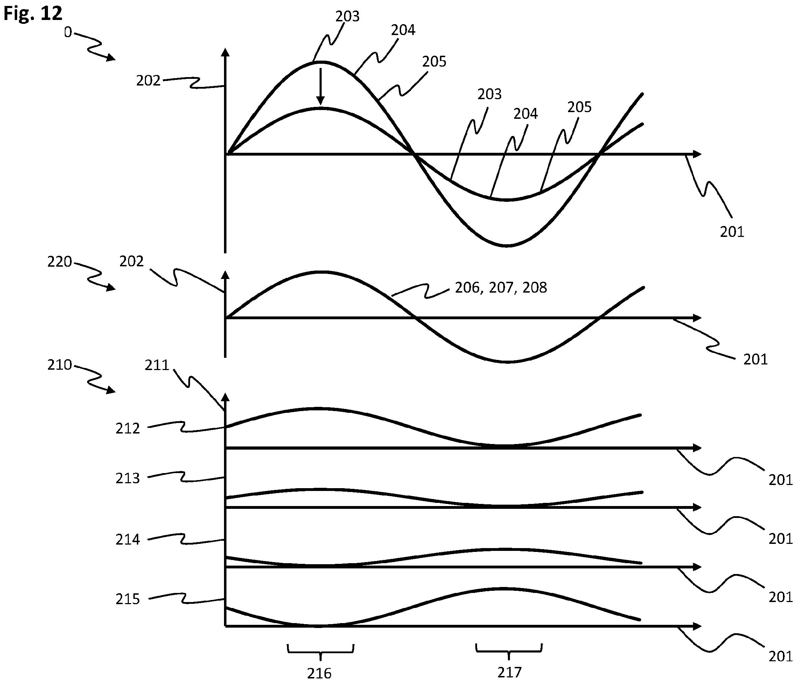

Fig. 12 zeigt ebenfalls ein erstes Diagramm 200, in dem anzulegende Spannungsverläufe der an den Antriebsspulen 110 anliegenden Spannungen gezeigt sind. Das erste Diagramm 200 weist dabei eine Zeitachse 201 und eine Spannungsachse 202 auf. Ein erster anzulegender Spannungsverlauf 203 entspricht der an der ersten Antriebsspule 111 anzulegenden Spannung. Ein zweiter anzulegender Spannungsverlauf 204 entspricht der an der zweiten Antriebsspule 112 anzulegenden Spannung. Ein dritter anzulegender Spannungsverlauf 205 entspricht der an der dritten Antriebsspule 113 anzulegenden Spannung. Die ersten, zweiten beziehungsweise dritten Spannungsverläufe 203, 204, 205 sind dabei jeweils sinusförmig und ihre Phase ist identisch. Aufgrund der im Zusammenhang mit Fig. 11 erläuterten Begrenzung ist in Fig. 12 vorgesehen, die Amplitude der Spannungsverläufe 203, 204, 205 zu senken. Dies ist mit einem Pfeil im ersten Diagramm 200 symbolisiert.

Fig. 12 zeigt außerdem ebenfalls ein zweites Diagramm 210, in dem Schaltzeitverläufe der an den ersten Schaltern 167 der Halbbrücken 150 der Fig. 9 anliegende Schaltsignale gezeigt sind. Das Diagramm weist ebenfalls eine Zeitachse 201 und eine Signalachse 211 auf. Ein erster Schaltzeitverlauf 212 entspricht dabei dem am ersten Schalter 167 der ersten Halbbrücke 163 angelegten Schaltsignal. Ein zweiter Schaltzeitverlauf 213 entspricht dabei dem am ersten Schalter 167 der zweiten Halbbrücke 164 angelegten Schaltsignal. Ein dritter Schaltzeitverlauf 214 entspricht dabei dem am ersten Schalter 167 der dritten Halbbrücke 165 angelegten Schaltsignal. Ein vierter Schaltzeitverlauf 215 entspricht dabei dem am ersten Schalter 167 der vierten Halbbrücke 166 angelegten Schaltsignal. Das am zweiten Schalter 168 der jeweiligen Halbbrücke 150 angelegte Schaltsignal ist dabei jeweils genau entgegengesetzt zum am ersten Schalter 167 der jeweiligen Halbbrücke 150 angelegten Schaltsignal, so dass immer entweder der erste Schalter 167 oder der zweite Schalter 168 einer jeden Halbbrücke 150 geschlossen ist, und gleichzeitig der zweite Schalter 168 beziehungsweise der erste Schalter 167 geöffnet ist.

Aufgrund der Begrenzung weist der erste Schaltzeitverlauf 212, der zweite Schaltzeitverlauf 213, der dritte Schaltzeitverlauf 214 und der vierte Schaltzeitverlauf 215 nun kein Plateau mehr auf. Die Höhe des ersten Schaltzeitverlaufs 212 ist in einem ersten Bereich 216 der Zeitachse 201 am größten, die Höhe des zweiten Schaltzeitverlaufs 213 ist im ersten Bereich 216 kleiner als die des ersten Schaltzeitverlaufs 212. Das dritte Schaltzeitverlauf 214 und das vierte Schaltzeitverlauf 215 sind im ersten Bereich jeweils Null. In einem zweiten Bereich 217 der Zeitachse 201 sind der erste Schaltzeitverlauf 212 und der zweite Schaltzeitverlauf 213 jeweils Null, während der vierte Schaltzeitverlauf 215 am größten ist und der dritte Schaltzeitverlauf 214 kleiner ist als der vierte Schaltzeitverlauf 215. Der erste Schaltzeitverlauf 212, der zweite Schaltzeitverlauf 213, der dritte Schaltzeitverlauf 214 und der vierte Schaltzeitverlauf 215 sind dabei jeweils sinusförmig, wobei die Aussage, dass einer der Schaltzeitverläufe in einem Bereich Null ist, bedeutet, dass dieser Schaltzeitverlauf dort die Zeitachse 201 berührt.

Die Höhe des ersten Schaltzeitverlaufs 212, des zweiten Schaltzeitverlaufs 213, des dritten Schaltzeitverlaufs 214 und des vierten Schaltzeitverlaufs 215 kann dabei mittels Pulsweitenmodulation eingestellt werden, wobei ein höheres Signal im ersten Schaltzeitverlauf 212, im zweiten Schaltzeitverlauf 213, im dritten Schaltzeitverlauf 214 oder im vierten Schaltzeitverlauf 215 einer jeweils größeren Pulsbreite in der Pulsweitenmodulation entspricht.

Fig. 12 zeigt außerdem ebenfalls ein drittes Diagramm 220, bei dem eine Spannungsachse 202 über einer Zeitachse 201 aufgetragen ist und in dem ein erster resultierender Spannungsverlauf 206, ein zweiter resultierender Spannungsverlauf 207 und ein dritter resultierender Spannungsverlauf 208 dargestellt sind. Aufgrund des Eingreifen des Begrenzungsreglers entsprechen der erste resultierende Spannungsverlauf 206, der zweite resultierende Spannungsverlauf 207 und der dritte resultierende Spannungsverlauf 208 nun dem ersten anzulegenden Spannungsverlauf 203, dem zweiten anzulegenden Spannungsverlauf 204 beziehungsweise dem dritte anzulegenden Spannungsverlauf 205 des ersten Diagramms 200.

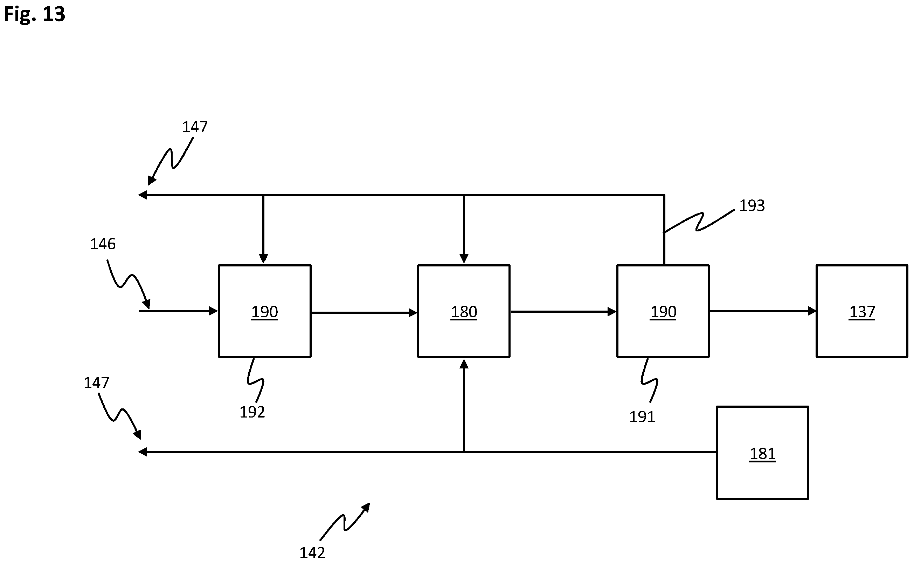

Fig. 13 zeigt eine Steuerung 142, die eingerichtet ist, das im Zusammenhang mit den Figuren 10 bis 12 beschriebe Verfahren durchzuführen. Die Steuerung 142 weist einen Steuerungsregler 180 und Strommesser 181 auf, die wie im Zusammenhang mit Fig. 7 erläutert ausgestaltet sein können. Der Steuerungsregler 180 kann dabei insbesondere ein PI-Regler sein, der eingerichtet ist, aus einem Stromsollwert oder einen Spannungssollwert und einem Stromistwert einen anzulegenden Spannungswert zu ermitteln und auszugeben. Die Steuerung 142 weist ferner einen Steuerungseingang 146 auf, der mit dem Kommunikationseingang 171 des Statormoduls 100 verbunden sein kann und über den Spannungs- oder Stromsollwerte eingelesen werden können. Ein Modulator 137 setzt die anzulegenden Spannungswerte mittels einer Modulationsvorschrift in den ersten Schaltzeitverlauf 212, den zweiten Schaltzeitverlauf 213, den dritten Schaltzeitverlauf 214 und den vierten Schaltzeitverlauf 215 wie in den Fig. 10 bis 12 dargestellt, um. Sind mehr oder weniger Halbbrücken 150 vorhanden, wird die Anzahl der Schaltzeitverläufe entsprechend erhöht oder reduziert.

Zwischen dem Modulator 137 und dem Steuerungsregler 180 ist ein Begrenzungsregler 190 angeordnet, der als erster Begrenzungsregler 191 ausgestaltet ist. Der erste Begrenzungsregler 191 ist dabei eingerichtet, die Stromsollwerte beziehungsweise Spannungssollwerte derart zu verändern, dass eine Summe von Spannungen der Antriebsspulen 110 eines Ansteuerungselements 140 eine Maximalspannung nicht übersteigt. Dies erfolgt durch die im Zusammenhang mit Fig. 11 beschriebene Kappung des ersten Schaltzeitverlaufs 212, des zweiten Schaltzeitverlaufs 213, des dritten Schaltzeitverlaufs 214 und des vierten Schaltzeitverlaufs 215, wodurch sich der gekappte erste resultierende Spannungsverlauf 206, der gekappte zweite resultierende Spannungsverlauf 207 der gekappte dritte resultierende Spannungsverlauf 208 ergeben.

Zwischen dem Steuerungseingang 146 und dem Steuerungsregler 180 ist ein Begrenzungsregler 190 angeordnet, der als zweiter Begrenzungsregler 192 ausgestaltet ist. Der zweite Begrenzungsregler 192 ist eingerichtet, die Spannungssollwerte oder Stromsollwerte der Antriebsspulen 110 wie im ersten Diagramm 200 der Fig. 12 gezeigt, zu reduzieren.

Die Strommesser 181 sind mit einem optionalen Steuerungsausgang 147 verbunden. So können die Stromistwerte auch an die Steuereinheit 8 weitergebenen werden. Ferner weist der erste Begrenzungsregler 191 einen optionalen Begrenzerausgang 193 auf. Dieser ist mit dem Steuerungsregler 180, dem zweiten Begrenzungsregler 192 und ebenfalls mit einem Steuerungsausgang 147 verbunden, wobei alle diese Verbindungen optional sind. Über den Begrenzerausgang 193 kann der erste Begrenzungsregler 191 eine Information ausgeben, dass eine Begrenzung erforderlich war. Dies kann beispielsweise durch den Steuerungsregler 180 berücksichtigt werden. Ferner kann der zweite Begrenzungsregler 192 eingerichtet sein, die im ersten Diagramm 200 der Fig. 12 gezeigte Veränderung der Spannungssollwerte nur vorzunehmen, wenn der erste Begrenzungsregler 191 ein entsprechendes Signal über den Begrenzerausgang 193 ausgegeben hat. Ferner kann vorgesehen sein, dieses Signal über den Steuerungsausgang 147 an die Steuereinheit 8 auszugeben, die dann eine der Funktionsweise des zweiten Begrenzungsreglers 192 entsprechende Veränderung der Spannungssollwerte beziehungsweise Stromsollwerte vorzunehmen.

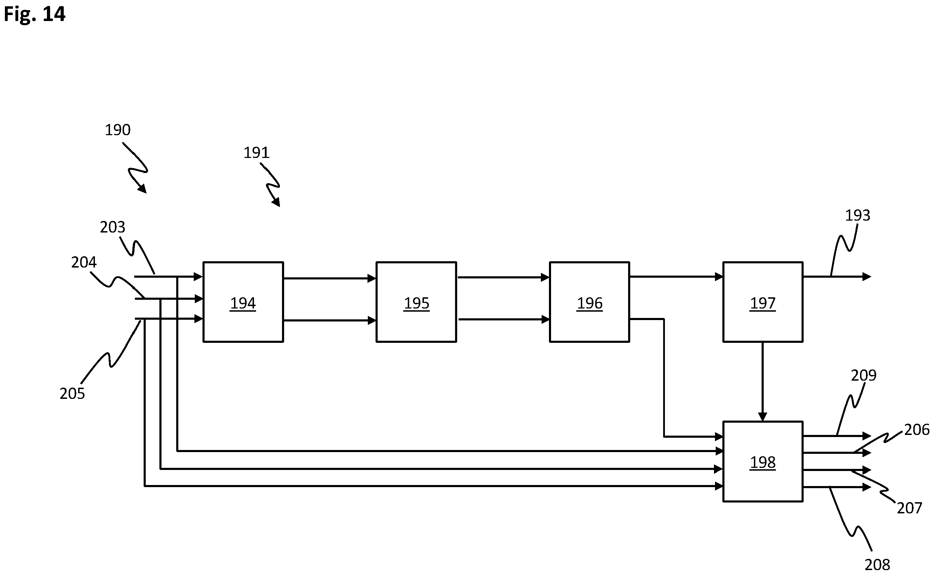

Fig. 14 zeigt eine Funktionsweise eines Begrenzungsreglers 190, insbesondere des ersten Begrenzungsreglers 191 der Fig. 13. Der erste anzulegende Spannungsverlauf 203, der zweite anzulegende Spannungsverlauf 204 und der dritte anzulegende Spannungsverlauf 205 werden als Eingabe einem Summenbildner 194 zur Verfügung gestellt. Der Summenbildner 194 ist eingerichtet, eine kumulierte Summe über den ersten anzulegenden Spannungsverlauf 203, den zweiten anzulegenden Spannungsverlauf 204 und den dritten anzulegenden Spannungsverlauf 205, also einen zeitlichen Spannungsverlauf der an die Antriebsspulen 110 eines Ansteuerungselements 140 anzulegenden Spannung, zu berechnen. Die kumulierte Summe wird an einen Extremwertermittler 195 weitergegeben. Der Extremwertermittler 195 ist eingerichtet, einen Maximalwert und einen Minimalwert der kumulierten Summe zu ermitteln. Der Maximalwert und der Minimalwert werden an einen Differenzbildner 196 weitergegeben. Der Differenzbildner 196 ist eingerichtet, zu überprüfen ob eine Differenz aus dem Maximalwert und dem Minimalwert eine Auslegungsspannung übersteigt. Die Differenz wird an eine Umsetzungstabelle 197 und eine Regeleinheit 198 weitergegeben. In der Umsetzungstabelle 197 können verschiedene Handlungsanweisungen anhand der Differenz ausgewählt werden und diese an die Regeleinheit weitergegeben werden. Beispielsweise kann in der Umsetzungstabelle 197 hinterlegt sein, dass für den Fall, dass die Differenz die Auslegungsspannung übersteigt, die Spannungssollwerte zu reduzieren sind wie im Zusammenhang mit Fig. 12 beschrieben oder zu kappen sind wie im Zusammenhang mit Fig. 11 beschrieben. Insbesondere kann in der Umsetzungstabelle 197 hinterlegt sein, dass bei einem nochmaligen Durchlaufen der Berechnungsschritte die Differenz die Auslegungsspannung nicht mehr übersteigen soll. Die Umsetzungstabelle 197 kann ferner beinhalten, eine Information darüber, dass eine Begrenzung stattgefunden hat, über den Begrenzerausgang auszugeben.

Die Differenz kann alternativ an eine Umsetzungsrecheneinheit in Form eines FPGAs weitergegeben werden, die die Funktionen der Umsetzungstabelle in Form von im Voraus programmierten Berechnungen erfüllt.

In der Regeleinheit 198 werden dann der erste anzulegende Spannungsverlauf 203, der zweite anzulegende Spannungsverlauf 204 und der dritte anzulegende Spannungsverlauf 205 anhand der mittels Umsetzungstabelle ermittelten Handlungsanweisungen umgesetzt und der erste resultierende Spannungsverlauf 206, der zweite resultierende Spannungsverlauf 207 und der dritte resultierende Spannungsverlauf 208 sowie eine Modulationsinformation 209 ausgegeben.

Die Berechnung des ersten resultierenden Spannungsverlaufs 206, des zweiten resultierenden Spannungsverlaufs 207 und des dritten resultierenden Spannungsverlaufs 208 kann beispielsweise wie im Folgenden beschrieben erfolgen. Nach Bildung der kumulierten Summe über den ersten anzulegenden Spannungsverlauf 203, den zweiten anzulegenden Spannungsverlauf 204 und den dritten anzulegenden Spannungsverlauf 205 und des Maximums beziehungsweise Minimums der kumulierten Summe wird ein Quotient aus Auslegungsspannung und Differenz gebildet. Der erste resultierende Spannungsverlauf 206 ergibt sich, indem der erste anzulegende Spannungsverlauf 203 mit dem Quotienten multipliziert wird, der zweite resultierende Spannungsverlauf 207 ergibt sich, indem der zweite anzulegende Spannungsverlauf 204 mit dem Quotienten multipliziert wird und der dritte resultierende Spannungsverlauf 208 ergibt sich, indem der dritte anzulegende Spannungsverlauf 205 mit dem Quotienten multipliziert wird.

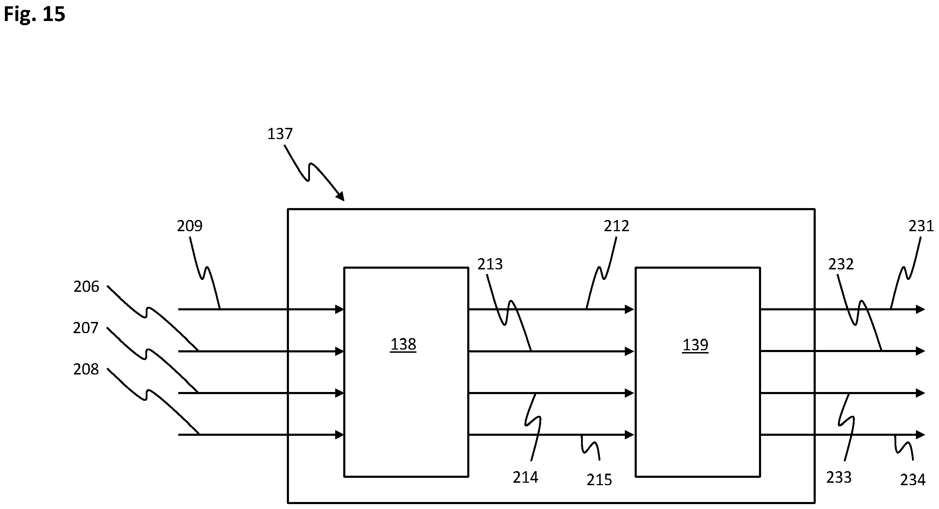

Fig. 15 zeigt eine Funktionsweise eines Modulators 137. Einem Schaltzeitenberechnungselement 138 des Modulators 137 werden der erste resultierende Spannungsverlauf 206, der zweite resultierende Spannungsverlauf 207 und der dritte resultierende Spannungsverlauf 208 sowie eine Modulationsinformation 209 zur Verfügung gestellt. Der Modulator 137 setzt diese Eingaben in den ersten Schaltzeitverlauf 212, den zweiten Schaltzeitverlauf 213, den dritten Schaltzeitverlauf 214 und den vierten Schaltzeitverlauf 215 um, wie beispielsweise im Zusammenhang mit den Fig. 10 bis 12 beschrieben. Der erste Schaltzeitverlauf 212, der zweite Schaltzeitverlauf 213, der dritten Schaltzeitverlauf 214 und der vierten Schaltzeitverlauf 215 werden dann in einem Pulsweitenmodulationselement 139 in ein erstes Pulsweitensignal 231, ein zweites Pulsweitensignal 232, ein drittes Pulsweitensignal 233 und ein viertes Pulsweitensignal 234 umgesetzt, die jeweils im kHz-Bereich liegen können.

Es kann vorgesehen sein, dass die im Zusammenhang mit dem Steuerungsregler 180 und den Begrenzungsreglern 190 erläuterten Schritte nicht ausschließlich in der Steuerung 142, sondern ganz oder teilweise in der Steuereinheit 7 des linearen Transportsystems 1 ausgeführt werden. Hierzu dienen insbesondere die in Fig. 13 gezeigten Steuerungsausgänge 147, um entsprechende Daten an die Steuereinheit 7 weitergeben zu können. Der in Fig. 1 als Teil der Steuereinheit 7 gezeigte Begrenzer 9 kann eingerichtet sein, derartige Schritte durchzuführen und insbesondere die im Zusammenhang mit dem ersten Begrenzungsregler 191 und dem zweiten Begrenzungsregler 192 erläuterten Schritte durchzuführen.

### Bezugszeichenliste

- 1: Lineares Transportsystem
- 7: Steuereinheit
- 8: Kommunikationsausgang
- 9: Begrenzer
- 10: Schlitten
- 11: Rahmen
- 12: Laufrolle
- 13: Permanentmagnetanordnung
- 20: Führungsschiene
- 100: Statormodul
- 101: Gehäuse
- 110: Antriebsspule
- 111: Erste Antriebsspule
- 112: Zweite Antriebsspule
- 113: Dritte Antriebsspule
- 114: Dreiphasensystem
- 120: Linearmotor
- 121: Stator
- 122: Läufer
- 130: Ansteuerungselektronik
- 137: Modulator
- 138: Schaltzeitenberechnungselement
- 139: Pulsweitenmodulationselement
- 140: Ansteuerungselement
- 141: Kette
- 142: Steuerung
- 143: Erster Spannungseingang
- 144: Zweiter Spannungseingang
- 145: Platine
- 146: Steuerungseingang
- 147: Steuerungsausgang
- 150: Halbbrücke
- 151: Erster Halbbrückenanschluss
- 152: Zweiter Halbbrückenanschluss
- 153: Halbbrückenmittelpunkt
- 154: Schalter
- 155: Schaltereingang
- 156: Anfangshalbbrücke
- 157: Anfangsmittelpunkt
- 158: Endhalbbrücke
- 159: Endmittelpunkt
- 160: Zwischenhalbbrücke
- 161: Zwischenmittelpunkt
- 163: Erste Halbbrücke
- 164: Zweite Halbbrücke
- 165: Dritte Halbbrücke
- 166: Vierte Halbbrücke
- 167: Erster Schalter
- 168: Zweiter Schalter
- 170: Modulanschluss
- 171: Kommunikationseingang
- 180: Steuerungsregler
- 181: Strommesser
- 190: Begrenzungsregler
- 191: Erster Begrenzungsregler
- 192: Zweiter Begrenzungsregler
- 193: Begrenzerausgang
- 194: Summenbildner
- 195: Extremwertermittler
- 196: Differenzbildner
- 197: Umsetzungstabelle
- 198: Regeleinheit
- 200: Erstes Diagramm
- 201: Zeitachse
- 202: Spannungsachse
- 203: Erster anzulegender Spannungsverlauf
- 204: Zweiter anzulegender Spannungsverlauf
- 205: Dritter anzulegender Spannungsverlauf
- 206: Erster resultierender Spannungsverlauf
- 207: Zweiter resultierender Spannungsverlauf
- 208: Dritter resultierender Spannungsverlauf
- 209: Modulationsinformation
- 210: Zweites Diagramm
- 211: Signalachse
- 212: Erster Schaltzeitverlauf
- 213: Zweiter Schaltzeitverlauf
- 214: Dritter Schaltzeitverlauf
- 215: Vierter Schaltzeitverlauf
- 216: Erster Bereich
- 217: Zweiter Bereich
- 220: Drittes Diagramm
- 231: Erstes Pulsweitensignal
- 232: Zweites Pulsweitensignal
- 233: Drittes Pulsweitensignal
- 234: Viertes Pulsweitensignal

## Patentansprüche

1. Statormodul (100) eines linearen Transportsystems (1), aufweisend eine Mehrzahl von Antriebsspulen (110), wobei die Antriebsspulen (110) bestromt werden können und einen Teil eines Stators (121) eines Linearmotors (120) bilden, wobei das Statormodul (100) ferner eine Ansteuerungselektronik (130) aufweist, wobei die Antriebsspulen (110) mit der Ansteuerungselektronik (130) angesteuert werden können, wobei die Ansteuerungselektronik (130) zumindest ein Ansteuerungselement (140) umfasst, wobei das Ansteuerungselement (140) eingerichtet ist, eine Anzahl von Antriebsspulen (110) zu bestromen, wobei das Ansteuerungselement (140) eine Anzahl von Halbbrücken (150) aufweist, wobei die Halbbrücken (150) jeweils einen ersten Halbbrückenanschluss (151), einen zweiten Halbbrückenanschluss (152) und einen Halbbrückenmittelpunkt (153) umfassen, wobei die ersten Halbbrückenanschlüsse (151) der Halbbrücken (150) miteinander verbunden sind, wobei die zweiten Halbbrückenanschlüsse (152) der Halbbrücken (150) miteinander verbunden sind, wobei die Halbbrücken (150) und die Antriebsspulen (110) eine Kette (141) bilden, wobei innerhalb der Kette (141) abwechselnd Halbbrückenmittelpunkte (153) und Antriebsspulen (110) angeordnet sind, wobei zumindest ein Halbbrückenmittelpunkt (153) mit zwei Antriebsspulen (110) verbunden ist, **dadurch gekennzeichnet, daß** das Statormodul ferner einen Kommunikationseingang (171) aufweist,
wobei das Statormodul (100) eingerichtet ist, über den Kommunikationseingang (171) Daten betreffend die Ansteuerung der Antriebsspulen (110) zu empfangen und die Halbbrücken (150) des Ansteuerungselements (140) entsprechend der Daten zu schalten, wobei das Statormodul ferner einen Begrenzungsregler (190) aufweist, wobei die Daten Stromsollwerte oder Spannungssollwerte für die Antriebsspulen (110) umfassen, wobei der Begrenzungsregler (190) eingerichtet ist, die Stromsollwerte beziehungsweise Spannungssollwerte zu verändern derart, dass eine Summe von Spannungen der Antriebsspulen (110) eines Ansteuerungselements (140) eine Maximalspannung nicht übersteigt, wobei der Begrenzungsregler (190) eingerichtet ist, eine kumulierte Summe über einen zeitlichen Spannungsverlauf der an die Antriebsspulen (110) eines Ansteuerungselements (140) anzulegenden Spannung zu berechnen, einen Maximalwert und einen Minimalwert der kumulierten Summe zu ermitteln, zu überprüfen ob eine Differenz aus dem Maximalwert und dem Minimalwert eine Auslegungsspannung übersteigt, und für den Fall, dass die Differenz die Auslegungsspannung übersteigt, die Spannungssollwerte zu reduzieren derart, dass bei einem nochmaligen Durchlaufen der Berechnungsschritte die Differenz die Auslegungsspannung nicht mehr übersteigt.

2. Statormodul (100) nach Anspruch 1, wobei innerhalb der Kette (141) abwechselnd genau ein Halbbrückenmittelpunkt (153) und genau eine Antriebsspule (110) angeordnet sind.

3. Statormodul (100) nach Anspruch 1 oder 2, wobei die Anzahl der Halbbrücken (150) um eins größer ist als die Anzahl der Antriebsspulen (110).

4. Statormodul (100) nach Anspruch 3, wobei ein Anfangsmittelpunkt (157) einer Anfangshalbbrücke (156) mit einer ersten Antriebsspule (111) verbunden ist, wobei die erste Antriebsspule (111) mit einem Zwischenmittelpunkt (161) einer Zwischenhalbbrücke (160) verbunden ist, wobei ein Endmittelpunkt (159) einer Endhalbbrücke (158) mit einer zweiten Antriebsspule (112) verbunden ist, wobei die zweite Antriebsspule (112) mit einem Zwischenmittelpunkt (161) einer Zwischenhalbbrücke (160) verbunden ist, wobei dritte Antriebsspulen (113) gemäß der Anzahl der Antriebsspulen (110) mit den Zwischenhalbbrücken (160) und gegebenenfalls weiteren Zwischenhalbbrücken (160) verbunden sind.

5. Statormodul (100) nach Anspruch 1 oder 2, wobei die Anzahl der Halbbrücken (150) identisch zur Anzahl der Antriebsspulen (110) ist.

6. Statormodul (100) nach Anspruch 5, wobei ein Anfangsmittelpunkt (157) einer Anfangshalbbrücke (156) mit einer ersten Antriebsspule (111) verbunden ist, wobei die erste Antriebsspule (111) mit einem Zwischenmittelpunkt (161) einer Zwischenhalbbrücke (160) verbunden ist, wobei der Anfangsmittelpunkt (157) der Anfangshalbbrücke (156) mit einer zweiten Antriebsspule (112) verbunden ist, wobei die zweite Antriebsspule (112) mit einem Zwischenmittelpunkt (161) einer Zwischenhalbbrücke (160) verbunden ist, wobei dritte Antriebsspulen (113) gemäß der Anzahl der Antriebsspulen (110) mit den Zwischenhalbbrücken (160) und gegebenenfalls weiteren Zwischenhalbbrücken (160) verbunden sind.

7. Statormodul (100) nach einem der Ansprüche 1 bis 6, wobei die Anzahl der Antriebsspulen (110) gleich drei ist.

8. Statormodul (100) nach Anspruch 7, wobei die drei durch die Ansteuereinheit (140) ansteuerbaren Antriebsspulen (110) ein Dreiphasensystem (114) bilden.

9. Statormodul (100) nach einem der Ansprüche 1 bis 8, ferner aufweisend einen Steuerungsregler (180), wobei der Steuerungsregler (180) eingerichtet ist, Stromistwerte der Antriebsspulen (110) zu ermitteln und die Halbbrücken (150) des Ansteuerungselements (140) anhand der Stromistwerte zu schalten.

10. Statormodul (100) nach einem der Ansprüche 1 bis 9, ferner aufweisend Strommesser (181) zur Ermittlung der Stromistwerte, wobei die Strommesser (181) innerhalb der Halbbrücken (150) und/oder in Reihe zu den Antriebsspulen (110) angeordnet sind.

11. Lineares Transportsystem (1) mit mindestens einem Statormodul (100) nach einem der Ansprüche 1 bis 10, und mindestens einem Schlitten (10).

12. Lineares Transportsystem (1) nach Anspruch 11, ferner aufweisend mindestens eine Steuereinheit (7), wobei die Steuereinheit (7) eingerichtet ist, über einen Kommunikationsausgang (8) Daten an einen Kommunikationseingang (171) des Statormoduls (100) weiterzugeben, wobei die Daten Stromsollwerte oder Spannungssollwerte für die Antriebsspulen (110) des Statormoduls (100) umfassen.

13. Lineares Transportsystem (1) nach Anspruch 12, wobei die Steuereinheit (7) einen Begrenzer (9) aufweist, wobei der Begrenzer (9) eingerichtet ist, die Stromsollwerte beziehungsweise Spannungssollwerte zu verändern derart, dass eine Summe von Spannungen der Antriebsspulen (110) eines Ansteuerungselements (140) eine Maximalspannung nicht übersteigt, wobei der Begrenzer (9) eingerichtet ist, eine kumulierte Summe über einen zeitlichen Spannungsverlauf der an die Antriebsspulen (100) eines Ansteuerungselements (140) anzulegenden Spannung zu berechnen, einen Maximalwert und einen Minimalwert der kumulierten Summe zu ermitteln, zu überprüfen ob eine Differenz aus dem Maximalwert und dem Minimalwert eine Auslegungsspannung übersteigt, und für den Fall, dass die Differenz die Auslegungsspannung übersteigt, die Spannungssollwerte zu reduzieren derart, dass bei einem nochmaligen Durchlaufen der Berechnungsschritte die Differenz die Auslegungsspannung nicht mehr übersteigt.

14. Lineares Transportsystem (1) mit mindestens einem Schlitten (10) und einem Statormodul (100), wobei das Statormodul (100) eine Mehrzahl von Antriebsspulen (110) aufweist, wobei die Antriebsspulen (110) bestromt werden können und einen Teil eines Stators (121) eines Linearmotors (120) bilden, wobei das Statormodul (100) ferner eine Ansteuerungselektronik (130) aufweist, wobei die Antriebsspulen (110) mit der Ansteuerungselektronik (130) angesteuert werden können, wobei die Ansteuerungselektronik (130) zumindest ein Ansteuerungselement (140) umfasst, wobei das Ansteuerungselement (140) eingerichtet ist, eine Anzahl von Antriebsspulen (110) zu bestromen, wobei das Ansteuerungselement (140) eine Anzahl von Halbbrücken (150) aufweist, wobei die Halbbrücken (150) jeweils einen ersten Halbbrückenanschluss (151), einen zweiten Halbbrückenanschluss (152) und einen Halbbrückenmittelpunkt (153) umfassen, wobei die ersten Halbbrückenanschlüsse (151) der Halbbrücken (150) miteinander verbunden sind, wobei die zweiten Halbbrückenanschlüsse (152) der Halbbrücken (150) miteinander verbunden sind, wobei die Halbbrücken (150) und die Antriebsspulen (110) eine Kette (141) bilden, wobei innerhalb der Kette (141) abwechselnd Halbbrückenmittelpunkte (153) und Antriebsspulen (110) angeordnet sind, wobei zumindest ein Halbbrückenmittelpunkt (153) mit zwei Antriebsspulen (110) verbunden ist, wobei das lineare Transportsystem (1) ferner eine Steuereinheit (7) aufweist, **dadurch gekennzeichnet, daß** die Steuereinheit (7) eingerichtet ist, über einen Kommunikationsausgang (8) Daten an einen Kommunikationseingang (171) des Statormoduls (100) weiterzugeben, wobei die Daten Stromsollwerte oder Spannungssollwerte für die Antriebsspulen (110) des Statormoduls (100) umfassen, wobei die Steuereinheit (7) einen Begrenzer (9) aufweist, wobei der Begrenzer (9) eingerichtet ist, die Stromsollwerte beziehungsweise Spannungssollwerte zu verändern derart, dass eine Summe von Spannungen der Antriebsspulen (110) eines Ansteuerungselements (140) eine Maximalspannung nicht übersteigt, wobei der Begrenzer (9) eingerichtet ist, eine kumulierte Summe über einen zeitlichen Spannungsverlauf der an die Antriebsspulen (100) eines Ansteuerungselements (140) anzulegenden Spannung zu berechnen, einen Maximalwert und einen Minimalwert der kumulierten Summe zu ermitteln, zu überprüfen ob eine Differenz aus dem Maximalwert und dem Minimalwert eine Auslegungsspannung übersteigt, und für den Fall, dass die Differenz die Auslegungsspannung übersteigt, die Spannungssollwerte zu reduzieren derart, dass bei einem nochmaligen Durchlaufen der Berechnungsschritte die Differenz die Auslegungsspannung nicht mehr übersteigt.

15. Verfahren zum Betreiben eines Statormoduls (100) eines linearen Transportsystems (1) nach einem der Ansprüche 1 bis 10, wobei Antriebsspulen (110) des Statormoduls (100) mittels Halbbrücken (150) angesteuert werden, wobei bei der Ansteuerung der Halbbrücken (150) berücksichtigt wird, dass zumindest eine Halbbrücke (150) mit zwei Antriebsspulen (110) verbunden ist, **dadurch gekennzeichnet, daß** das Statormodul (100) Daten mit Stromsollwerten oder Spannungssollwerten für die Antriebsspulen (110) empfängt, und die Stromsollwerte beziehungsweise Spannungssollwerte derart verändert, dass eine Summe von Spannungen der Antriebsspulen (110) eines Ansteuerungselements (140) eine Maximalspannung nicht übersteigt, wobei das Statormodul (100) eine kumulierte Summe über einen zeitlichen Spannungsverlauf der an die Antriebsspulen (110) eines Ansteuerungselements (140) anzulegenden Spannung berechnet, einen Maximalwert und einen Minimalwert der kumulierten Summe ermittelt, überprüft, ob eine Differenz aus dem Maximalwert und dem Minimalwert eine Auslegungsspannung übersteigt, und für den Fall, dass die Differenz die Auslegungsspannung übersteigt, die Spannungssollwerte reduziert derart, dass bei einem nochmaligen Durchlaufen der Berechnungsschritte die Differenz die Auslegungsspannung nicht mehr übersteigt.

## Claims

1. A stator module (100) of a linear transport system (1), comprising a plurality of drive coils (110), wherein the drive coils (110) may be energized and form part of a stator (121) of a linear motor (120), wherein the stator module (100) further comprises actuation electronics (130), wherein the drive coils (110) may be actuated via the actuation electronics (130), wherein the actuation electronics (130) comprises at least one actuation element (140), wherein the actuation element (140) is set up to energize a number of drive coils (110), wherein the actuation element (140) comprises a number of half bridges (150), wherein the half bridges (150) each comprise a first half-bridge connection (151), a second half-bridge connection (152), and a half-bridge center (153), wherein the first half-bridge connections (151) of the half bridges (150) are connected to one another, wherein the second half-bridge connections (152) of the half bridges (150) are connected to one another, wherein the half bridges (150) and the drive coils (110) form a chain (141), wherein half-bridge centers (153) and drive coils (110) are alternately arranged within the chain (141), wherein at least one half-bridge center (153) is connected to two drive coils (110), **characterized in that** the stator module further comprises a communication input (171), wherein the stator module (100) is set up to receive data regarding the actuation of the drive coils (110) via the communication input (171) and to switch the half bridges (150) of the actuation element (140) according to the data, wherein the stator module further comprises a limiting controller (190), wherein the data comprise current setpoints or voltage setpoints for the drive coils (110), wherein the limiting controller (190) is set up to change the current setpoints or voltage setpoints, respectively, in such a way that a sum of voltages of the drive coils (110) of an actuation element (140) does not exceed a maximum voltage, wherein the limiting controller (190) is set up to calculate a cumulative sum of a time curve of the voltage to be applied to the drive coils (110) of an actuation element (140), to determine a maximum value and a minimum value of the cumulative sum, to check whether a difference of the maximum value and the minimum value exceeds a design voltage, and in case the difference exceeds the design voltage, to reduce the voltage setpoints in such a manner that the difference no longer exceeds the design voltage when the calculation steps are repeated.

2. The stator module (100) according to claim 1, wherein within the chain (141) precisely one half-bridge center (153) and precisely one drive coil (110) are arranged in an alternating manner.

3. The stator module (100) according to claim 1 or 2, wherein the number of half bridges (150) is larger by one than the number of drive coils (110).

4. The stator module (100) according to claim 3, wherein an initial center (157) of an initial half bridge (156) is connected to a first drive coil (111), wherein the first drive coil (111) is connected to an intermediate center (161) of an intermediate half bridge (160), wherein an end center (159) of an end half bridge (158) is connected to a second drive coil (112), wherein the second drive coil (112) is connected to an intermediate center (161) of an intermediate half bridge (160), wherein third drive coils (113) are connected to the intermediate half bridges (160) and, as the case may be, to further intermediate half bridges (160) in accordance with the number of drive coils (110).

5. The stator module (100) according to claim 1 or 2, wherein the number of half bridges (150) is identical to the number of drive coils (110).

6. The stator module (100) according to claim 5, wherein an initial center (157) of an initial half bridge (156) is connected to a first drive coil (111), wherein the first drive coil (111) is connected to an intermediate center (161) of an intermediate half bridge (160), wherein the initial center (157) of the initial half bridge (156) is connected to a second drive coil (112), wherein the second drive coil (112) is connected to an intermediate center (161) of an intermediate half bridge (160), wherein third drive coils (113) are connected to the intermediate half bridges (160) and, as the case may be, to further intermediate half bridges (160) in accordance with the number of drive coils (110).

7. The stator module (100) according to any one of claims 1 to 6, wherein the number of drive coils (110) equals three.

8. The stator module (100) according to claim 7, wherein the three drive coils (110) that may be actuated by the actuation unit (140) form a three-phase system (114).

9. The stator module (100) according to any one of claims 1 to 8, further comprising a control regulator (180), wherein the control regulator (180) is configured to determine actual current values of the drive coils (110) and to switch the half bridges (150) of the actuation element (140) based on the actual current values.

10. The stator module (100) according to any one of claims 1 to 9, further comprising current meters (181) for determining the actual current values, wherein the current meters (181) are arranged within the half bridges (150) and/or in series with the drive coils (110).

11. A linear transport system (1) comprising at least one stator module (100) according to any one of claims 1 to 10, and at least one slide (10).

12. The linear transport system (1) according to claim 11, further comprising at least a controller (7), wherein the controller (7) is set up to forward data to a communication input (171) of the stator module (100) via a communication output (8), wherein the data comprise current setpoints or voltage setpoints for the drive coils (110) of the stator module (100).

13. The linear transport system (1) according to claim 12, wherein the controller (7) comprises a limiter (9), wherein the limiter (9) is set up to change the current setpoints or voltage setpoints in such a way that a sum of voltages of the drive coils (110) of an actuation element (140) does not exceed a maximum voltage, wherein the limiter (9) is set up to calculate a cumulative sum of a time curve of the voltage to be applied to the drive coils (100) of an actuation element (140), to determine a maximum value and a minimum value of the cumulative sum, to check whether a difference of the maximum value and the minimum value exceeds a design voltage, and in case that the difference exceeds the design voltage, to reduce the voltage setpoints in such a way that the difference no longer exceeds the design voltage when the calculation steps are repeated.

14. A linear transport system (1) comprising at least one slide (10) and a stator module (100), wherein the stator module (100) comprises a plurality of drive coils (110), wherein the drive coils (110) may be energized and form part of a stator (121) of a linear motor (120), wherein the stator module (100) further comprises actuation electronics (130), wherein the drive coils (110) may be actuated via the actuation electronics (130), wherein the actuation electronics (130) comprises at least one actuation element (140), wherein the actuation element (140) is set up to energize a number of drive coils (110), wherein the actuation element (140) comprises a number of half bridges (150), wherein the half bridges (150) each comprise a first half-bridge connection (151), a second half-bridge connection (152), and a half-bridge center (153), wherein the first half-bridge connections (151) of the half bridges (150) are connected to one another, wherein the second half-bridge connections (152) of the half bridges (150) are connected to one another, wherein the half bridges (150) and the drive coils (110) form a chain (141), wherein half-bridge centers (153) and drive coils (110) are alternately arranged within the chain (141), wherein at least one half-bridge center (153) is connected to two drive coils (110), wherein the linear transport system further comprises a controller (7), **characterized in that** the controller (7) is configured to forward data to a communication input (171) of the stator module (100) via a communication output (8), wherein the data comprise current setpoints or voltage setpoints for the drive coils (110) of the stator modules (100), wherein the controller (7) comprises a limiter (9), wherein the limiter (9is set up to change the current setpoints or voltage setpoints, respectively, in such a way that a sum of voltages of the drive coils (110) of an actuation element (140) does not exceed a maximum voltage, wherein the limiter (9) is set up to calculate a cumulative sum of a time curve of the voltage to be applied to the drive coils (110) of an actuation element (140), to determine a maximum value and a minimum value of the cumulative sum, to check whether a difference of the maximum value and the minimum value exceeds a design voltage, and in case the difference exceeds the design voltage, to reduce the voltage setpoints in such a manner that the difference no longer exceeds the design voltage when the calculation steps are repeated.

15. A method for operating a stator module (100) of a linear transport system (1) according to any one of claims 1 to 10, wherein drive coils (110) of the stator module (100) are actuated with the aid of half bridges (150), wherein the actuation of the half bridges (150) takes into account that at least one half bridge (150) is connected to two drive coils (110), **characterized in that** the stator module (100) receives data comprising current setpoints or voltage setpoints for the drive coils (110), and changes the current setpoints or voltage setpoints in such a way that a sum of voltages of the drive coils (110) of an actuation element (140) does not exceed a maximum voltage, wherein the stator module (100) calculates a cumulative sum of a time curve of the voltage to be applied to the drive coils (110) of an actuation element (140), determines a maximum value and a minimum value of the cumulative sum, checks whether a difference from the maximum value and the minimum value exceeds a design voltage, and in case that the difference exceeds the design voltage, reduces the voltage setpoints in such a way that when the calculation steps are repeated, the difference no longer exceeds the design voltage.

## Revendications

1. Module de stator (100) d'un système de transport linéaire (1), possédant une pluralité de bobines d'entraînement (110), les bobines d'entraînement (110) pouvant être alimentées électriquement et formant une partie d'un stator (121) d'un moteur linéaire (120), le module de stator (100) possédant en outre une électronique de pilotage (130), les bobines d'entraînement (110) pouvant être pilotées par l'électronique de pilotage (130), l'électronique de pilotage (130) comportant au moins un élément de pilotage (140), l'élément de pilotage (140) étant conçu pour alimenter électriquement un certain nombre de bobines d'entraînement (110), l'élément de pilotage (140) possédant un certain nombre de demi-ponts (150), les demi-ponts (150) comportant respectivement une première borne de demi-pont (151), une deuxième borne de demi-pont (152) et un point central de demi-pont (153), les premières bornes de demi-pont (151) des demi-ponts (150) étant reliées entre elles, les deuxièmes bornes de demi-pont (152) des demi-ponts (150) étant reliées entre elles, les demi-ponts (150) et les bobines d'entraînement (110) formant une chaîne (141), des points centraux de demi-pont (153) et des bobines d'entraînement (110) étant disposés en alternance à l'intérieur de la chaîne (141), au moins un point central de demi-pont (153) étant relié à deux bobines d'entraînement (110), **caractérisé en ce que** le module de stator possède en outre une entrée de communication (171), le module de stator (100) étant conçu pour recevoir, par le biais de l'entrée de communication (171), des données concernant le pilotage des bobines d'entraînement (110) et commuter les demi-ponts (150) de l'élément de pilotage (140) conformément aux données, le module de stator possédant en outre un régulateur de limitation (190), les données comprenant des valeurs de consigne de courant ou des valeurs de consigne de tension pour les bobines d'entraînement (110), le régulateur de limitation (190) étant conçu pour modifier les valeurs de consigne de courant ou les valeurs de consigne de tension de telle sorte qu'une somme des tensions des bobines d'entraînement (110) d'un élément de pilotage (140) ne dépasse pas une tension maximale, le régulateur de limitation (190) étant conçu pour calculer une somme cumulée sur une évolution de tension dans le temps de la tension à appliquer aux bobines d'entraînement (110) d'un élément de pilotage (140), déterminer une valeur maximale et une valeur minimale de la somme cumulée, vérifier si une différence entre la valeur maximale et la valeur minimale dépasse une tension de conception et, dans le cas où la différence dépasse la tension de conception, réduire les valeurs de consigne de tension de telle sorte que lors d'une nouvelle itération des étapes de calcul, la différence ne dépasse plus la tension de conception.

2. Module de stator (100) selon la revendication 1, exactement un point central de demi-pont (153) et exactement une bobine d'entraînement (110) étant disposés en alternance à l'intérieur de la chaîne (141).

3. Module de stator (100) selon la revendication 1 ou 2, le nombre de demi-ponts (150) étant supérieur de un au nombre de bobines d'entraînement (110).

4. Module de stator (100) selon la revendication 3, un point central de début (157) d'un demi-pont de début (156) étant relié à une première bobine d'entraînement (111), la première bobine d'entraînement (111) étant reliée à un point central intermédiaire (161) d'un demi-pont intermédiaire (160), un point central final (159) d'un demi-pont final (158) étant relié à une deuxième bobine d'entraînement (112), la deuxième bobine d'entraînement (112) étant reliée à un point central intermédiaire (161) d'un demi-pont intermédiaire (160), des troisièmes bobines d'entraînement (113) étant reliées selon le nombre de bobines d'entraînement (110) aux demi-ponts intermédiaires (160) et éventuellement à des demi-ponts intermédiaires (160) supplémentaires.

5. Module de stator (100) selon la revendication 1 ou 2, le nombre de demi-ponts (150) étant identique au nombre de bobines d'entraînement (110).

6. Module de stator (100) selon la revendication 5, un point central de début (157) d'un demi-pont de début (156) étant relié à une première bobine d'entraînement (111), la première bobine d'entraînement (111) étant reliée à un point central intermédiaire (161) d'un demi-pont intermédiaire (160), le point central de début (157) du demi-pont de début (156) étant relié à une deuxième bobine d'entraînement (112), la deuxième bobine d'entraînement (112) étant reliée à un point central intermédiaire (161) d'un demi-pont intermédiaire (160), des troisièmes bobines d'entraînement (113) étant reliées selon le nombre de bobines d'entraînement (110) aux demi-ponts intermédiaires (160) et éventuellement à des demi-ponts intermédiaires (160) supplémentaires.

7. Module de stator (100) selon l'une des revendications 1 à 6, le nombre de bobines d'entraînement (110) étant égal à trois.

8. Module de stator (100) selon la revendication 7, les trois bobines d'entraînement (110) pouvant être pilotées par l'unité de pilotage (140) formant un système triphasé (114).

9. Module de stator (100) selon l'une des revendications 1 à 8, possédant en outre un régulateur de commande (180), le régulateur de commande (180) étant conçu pour déterminer des valeurs réelles de courant des bobines d'entraînement (110) et commuter les demi-ponts (150) de l'élément de pilotage (140) à l'aide des valeurs réelles de courant.

10. Module de stator (100) selon l'une des revendications 1 à 9, possédant en outre des dispositifs de mesure du courant (181) destiné à déterminer les valeurs réelles de courant, les dispositifs de mesure du courant (181) étant disposés à l'intérieur des demi-ponts (150) et/ou en série avec les bobines d'entraînement (110).

11. Système de transport linéaire (1) comprenant au moins un module de stator (100) selon l'une des revendications 1 à 10 et au moins un chariot (10).

12. Système de transport linéaire (1) selon la revendication 11, possédant en outre au moins une unité de commande (7), l'unité de commande (7) étant conçue pour, par le biais d'une sortie de communication (8), retransmettre des données à une entrée de communication (171) du module de stator (100), les données comprenant des valeurs de consigne de courant ou des valeurs de consigne de tension pour les bobines d'entraînement (110) du module de stator (100).

13. Système de transport linéaire (1) selon la revendication 12, l'unité de commande (7) possédant un limiteur (9), le limiteur (9) étant conçu pour modifier les valeurs de consigne de courant ou les valeurs de consigne de tension de telle sorte qu'une somme de tension des bobines d'entraînement (110) d'un élément de pilotage (140) ne dépasse pas une tension maximale, le limiteur (9) étant conçu pour calculer une somme cumulée sur une évolution de tension dans le temps de la tension à appliquer aux bobines d'entraînement (110) d'un élément de pilotage (140), déterminer une valeur maximale et une valeur minimale de la somme cumulée, vérifier si une différence entre la valeur maximale et la valeur minimale dépasse une tension de conception et, dans le cas où la différence dépasse la tension de conception, réduire les valeurs de consigne de tension de telle sorte que lors d'une nouvelle itération des étapes de calcul, la différence ne dépasse plus la tension de conception.

14. Système de transport linéaire (1) comprenant au moins un chariot (10) et un module de stator (100), le module de stator (100) possédant une pluralité de bobines d'entraînement (110), les bobines d'entraînement (110) pouvant être alimentées électriquement et formant une partie d'un stator (121) d'un moteur linéaire (120), le module de stator (100) possédant en outre une électronique de pilotage (130), les bobines d'entraînement (110) pouvant être pilotées par l'électronique de pilotage (130), l'électronique de pilotage (130) comportant au moins un élément de pilotage (140), l'élément de pilotage (140) étant conçu pour alimenter électriquement un certain nombre de bobines d'entraînement (110), l'élément de pilotage (140) possédant un certain nombre de demi-ponts (150), les demi-ponts (150) comportant respectivement une première borne de demi-pont (151), une deuxième borne de demi-pont (152) et un point central de demi-pont (153), les premières bornes de demi-pont (151) des demi-ponts (150) étant reliées entre elles, les deuxièmes bornes de demi-pont (152) des demi-ponts (150) étant reliées entre elles, les demi-ponts (150) et les bobines d'entraînement (110) formant une chaîne (141), des points centraux de demi-pont (153) et des bobines d'entraînement (110) étant disposés en alternance à l'intérieur de la chaîne (141), au moins un point central de demi-pont (153) étant relié à deux bobines d'entraînement (110), le système de transport linéaire (1) possédant en outre une unité de commande (7), **caractérisé en ce que** l'unité de commande (7) est conçue pour, par le biais d'une sortie de communication (8), retransmettre des données à une entrée de communication (171) du module de stator (100), les données comprenant des valeurs de consigne de courant ou des valeurs de consigne de tension pour les bobines d'entraînement (110) du module de stator (100), l'unité de commande (7) possédant un limiteur (9), le limiteur (9) étant conçu pour modifier les valeurs de consigne de courant ou les valeurs de consigne de tension de telle sorte qu'une somme de tension des bobines d'entraînement (110) d'un élément de pilotage (140) ne dépasse pas une tension maximale, le limiteur (9) étant conçu pour calculer une somme cumulée sur une évolution de tension dans le temps de la tension à appliquer aux bobines d'entraînement (110) d'un élément de pilotage (140), déterminer une valeur maximale et une valeur minimale de la somme cumulée, vérifier si une différence entre la valeur maximale et la valeur minimale dépasse une tension de conception et, dans le cas où la différence dépasse la tension de conception, réduire les valeurs de consigne de tension de telle sorte que lors d'une nouvelle itération des étapes de calcul, la différence ne dépasse plus la tension de conception.

15. Procédé pour faire fonctionner un module de stator (100) d'un système de transport linéaire (1) selon l'une des revendications 1 à 10, les bobines d'entraînement (110) du module de stator (100) étant pilotées au moyen de demi-ponts (150), en tenant compte, lors du pilotage des demi-ponts (150), qu'au moins un demi-pont (150) est relié à deux bobines d'entraînement (110), **caractérisé en ce que** le module de stator (100) reçoit des données comprenant des valeurs de consigne de courant ou des valeurs de consigne de tension pour les bobines d'entraînement (110) et modifie les valeurs de consigne de courant ou les valeurs de consigne de tension de telle sorte qu'une somme des tensions des bobines d'entraînement (110) d'un élément de pilotage (140) ne dépasse pas une tension maximale, le module de stator (100) calculant une somme cumulée sur une évolution de tension dans le temps de la tension à appliquer aux bobines d'entraînement (110) d'un élément de pilotage (140), déterminant une valeur maximale et une valeur minimale de la somme cumulée, vérifiant si une différence entre la valeur maximale et la valeur minimale dépasse une tension de conception et, dans le cas où la différence dépasse la tension de conception, réduisant les valeurs de consigne de tension de telle sorte que lors d'une nouvelle itération des étapes de calcul, la différence ne dépasse plus la tension de conception.
